(19) Europäisches Patentamt
European Patent Office
Office européen des brevets

(11) **EP 1 541 613 B1**

(12) **EUROPEAN PATENT SPECIFICATION**

(45) Date of publication and mention of the grant of the patent:
**07.10.2009 Bulletin 2009/41**

(51) Int Cl.:
*C08G 63/85* [(2006.01)]   *C08G 63/82* [(2006.01)]
*C08G 63/87* [(2006.01)]   *C08G 63/83* [(2006.01)]
*C08G 63/183* [(2006.01)]

(21) Application number: **03766747.4**

(22) Date of filing: **05.08.2003**

(86) International application number:
**PCT/JP2003/009931**

(87) International publication number:
**WO 2004/013203 (12.02.2004 Gazette 2004/07)**

(54) **POLYESTER RESIN AND METHOD FOR PRODUCTION THEREOF**

POLYESTERHARZ UND HERSTELLUNGSVERFAHREN DAFÜR

RESINE POLYESTER ET SON PROCEDE DE PRODUCTION

(84) Designated Contracting States:
**DE ES FR GB IT**

(30) Priority: **05.08.2002 JP 2002227403**

(43) Date of publication of application:
**15.06.2005 Bulletin 2005/24**

(73) Proprietor: **Mitsubishi Chemical Corporation**
**Minato-ku**
**Tokyo 108-0014 (JP)**

(72) Inventors:
• **FUJIMORI, Yoshihiro;**
**c/o Mitsubishi Chemical Corp.**
**Yokkaichi-shi, Mie 510-0848 (JP)**
• **YUKITA, Naoki;**
**c/o Mitsubishi Chemical Corp.**
**Yokkaichi-shi, Mie 510-0848 (JP)**

(74) Representative: **TER MEER - STEINMEISTER &**
**PARTNER GbR**
**Patentanwälte**
**Mauerkircherstrasse 45**
**81679 München (DE)**

(56) References cited:
EP-A- 0 284 426      EP-A- 0 926 179
EP-A- 1 013 692      EP-A- 1 065 230
EP-A- 1 099 720      EP-A- 1 273 610
JP-A- 2002 179 781   US-A- 3 907 754
US-A- 4 340 721      US-A- 5 270 444
US-A- 5 688 899      US-A- 6 013 756
US-A- 6 066 714      US-B1- 6 284 866

• DATABASE WPI Section Ch, Week 200123
Derwent Publications Ltd., London, GB; Class
A23, AN 2001-220678 XP002295335 & JP 2001
002792 A (TOYOBO KK) 9 January 2001
(2001-01-09)
• DATABASE WPI Section Ch, Week 200016
Derwent Publications Ltd., London, GB; Class
A23, AN 2000-117306 XP002316003 & JP 2000
026587 A (MITSUBISHI CHEM CORP) 25 January
2000 (2000-01-25)

**Description**

TECHNICAL FIELD

The present invention relates to a polyester resin and its production process. More particularly, it relates to a polyester resin having various physical properties and color tone suitable for various applications to e.g. containers such as bottles, films, sheets and fibers, and a process for producing such a polyester resin.

BACKGROUND ART

Heretofore, a polyester resin, particularly a polyethylene terephthalate resin produced from terephthalic acid and ethylene glycol as raw materials, has been widely used for various applications to e.g. containers such as bottles, films, sheets and fibers, since it is excellent in chemical and physical properties.

On the other hand, such a polyester resin is produced by, for example, a melt polycondensation reaction via an esterification reaction and as the case requires, particularly for containers, further by a solid phase polycondensation reaction. A catalyst is used for the polycondensation reaction in general, and as the polycondensation catalyst, an antimony compound or a germanium compound is used in most cases on an industrial scale. However, a polyester resin produced by employing an antimony compound as the catalyst has characteristic dull color and has drawbacks in the safety and sanitation and in the environment due to toxicity pointed out regarding the antimony compound. Further, although a polyethylene terephthalate resin produced by employing a germanium compound as the catalyst is preferred in view of e.g. transparency and safety and sanitation, the germanium compound itself is very expensive and economical disadvantage is inevitable. Therefore, a polycondensation catalyst which takes the place of them is strongly desired.

From the above reasons, many compounds have conventionally been proposed as catalysts which take the place of the antimony compound and the germanium compound, and among them, various titanium compounds have been proposed since they are available at a low cost and are free from problems in view of e.g. safety and sanitation. However, a polyester resin produced by employing a titanium compound as the catalyst is specifically yellowish. Further, it is poor in the thermal stability, and acetaldehyde derived from the decomposition reaction may form as a by-product in a large amount during e.g. the polycondensation and melt molding for example. Accordingly, various proposals have been made with respect to the color tone, improvement in e.g. the thermal stability and reduction of the acetaldehyde content.

Quite a few years ago, JP-B-61-15088 proposes use of a titanium compound, a cobalt compound and an alkali metal compound as catalysts for the purpose of improving the color tone of a polyester resin. However, with the catalyst system disclosed in JP-B-61-15088, the yellow tone occurred by the titanium compound is merely eliminated complimentarily by the blue tone specific to a cobalt compound, and resultingly, the psychometric lightness (value L) of the Hunter's color difference formula of the polyester resin significantly decreases. Thus, essential resolution is not achieved, the thermal stability is not improved, and the acetaldehyde content derived from the decomposition reaction is high also.

On the other hand, JP-A-2002-179781 published in recent years proposes use of a titanium compound, an alkali metal or alkaline earth metal compound and a phosphorus compound in a specific limited ratio. However, according to the studies by the present inventors, it has been found that with the catalyst system as disclosed in JP-A-2002-179781, although a polyester resin having favorable color tone will be obtained by melt polycondensation, since the solid phase polycondensation velocity is low, it takes long to obtain a resin having a desired intrinsic viscosity and the color tone tends to deteriorate accordingly, or since the titanium compound is required in a relatively large amount, the color tone tends to deteriorate or the increase in the acetaldehyde content is remarkable during e.g. melt molding.

Under these circumstances, the present invention has been made to overcome the above problems regarding the polyester resin employing a titanium compound as a polycondensation catalyst. Accordingly, it is an object of the present invention to provide a polyester resin which is excellent in the color tone and transparency, which has a low acetaldehyde content, and further, which is excellent in the thermal stability and in which the increase in the acetaldehyde content during e.g. the melt molding is decreased, and a process for producing such a polyester resin at a high polycondensation velocity.

DISCLOSURE OF THE INVENTION

The present invention has been made to achieve the above object. Namely, the present invention resides in a polyester resin according to claim 1.

The present invention further resides in a process for producing a polyester resin according to claim 11.

## EP 1 541 613 B1

BRIEF EXPLANATION OF THE DRAWINGS

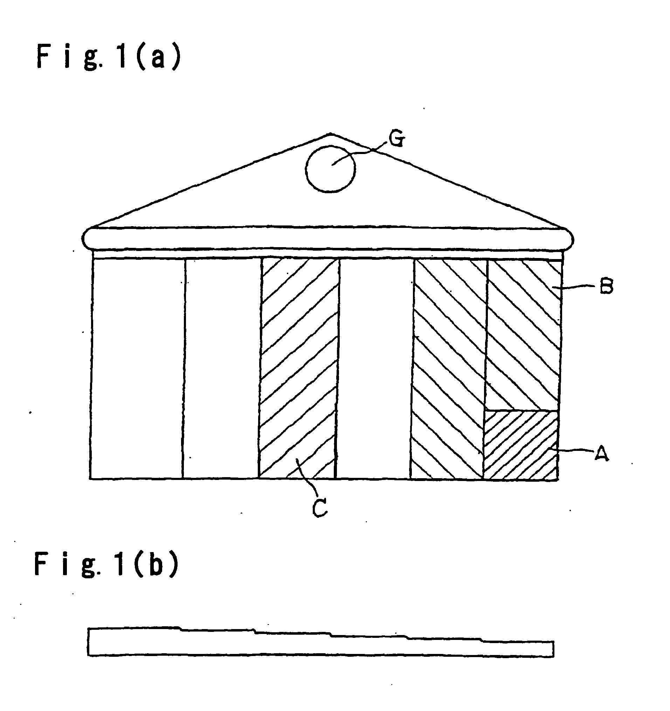

Fig. 1(a) and Fig. 1(b) are a plan view and a front view, respectively, illustrating a stepped molded plate for evaluation of the physical properties, molded in Examples.

BEST MODE FOR CARRYING OUT THE INVENTION

The polyester resin of the present invention is obtained by polycondensing a dicarboxylic acid component containing terephthalic acid as the main component and a diol component containing ethylene glycol as the main component, via an esterification reaction, and preferably it is a polycondensed product of a dicarboxylic acid component of which the terephthalic acid component is at least 96 mol%, more preferably at least 98.5 mol% of the total dicarboxylic acid component, and a diol component of which the ethylene glycol component is at least 96 mol%, more preferably at least 97 mol% of the total diol component. If the proportion of the terephthalic acid component to the total dicarboxylic acid component or the proportion of the ethylene glycol component to the total diol component is less than the above range, orientated crystallization of molecular chains by stretching at the time of molding into e.g. bottles tends to be insufficient, and the mechanical strength, the heat resistance, the aroma-retention property, the gas barrier properties etc. as molded products such as bottles tend to be insufficient. The content of the copolymerizable components other than the terephthalic acid component and the ethylene glycol component is preferably at most 6 mol% based on the total dicarboxylic acid component, more preferably from 1.5 to 4.5 mol%.

The dicarboxylic acid component other than terephthalic acid may, for example, be an aromatic dicarboxylic acid such as phthalic acid, isophthalic acid, dibromoisophthalic acid, sodium sulfoisophthalate, phenylenedioxy dicarboxylic acid, 4,4'-diphenyl dicarboxylic acid, 4,4'-diphenyl ether dicarboxylic acid, 4,4'-diphenyl ketone dicarboxylic acid, 4,4'-diphenoxyethane dicarboxylic acid, 4,4'-diphenylsulfone dicarboxylic acid or 2,6-naphthalene dicarboxylic acid, an alicyclic dicarboxylic acid such as hexahydroterephthalic acid or hexahydroisophthalic acid, or an aliphatic dicarboxylic acid such as succinic acid, glutaric acid, adipic acid, pimelic acid, suberic acid, azelaic acid, sebacic acid, undecadicarboxylic acid or dodecadicarboxylic acid. Among them, isophthalic acid is preferred in the present invention.

Further, the diol component other than ethylene glycol may be diethylene glycol formed as a by-product in the reaction system, and the proportion of the diethylene glycol to the total diol component is preferably at most 3.0 mol% including the content of a copolymerizable component added from outside the system, more preferably at most 2.5 mol%, particularly preferably at most 2.0 mol%. If the proportion of the diethylene glycol exceeds the above range, the heat resistance, the aroma-retention property, the gas barrier properties or the stress crack resistance when the obtained resin is formed into a molded product may decrease, or it tends to be difficult to reduce the acetaldehyde content.

The diol component other than ethylene glycol may, for example, be an aliphatic diol such as trimethylene glycol, tetramethylene glycol, pentamethylene glycol, hexamethylene glycol, octamethylene glycol, decamethylene glycol, neopentyl glycol, 2-ethyl-2-butyl-1,3-propane diol, polyethylene glycol or polytetramethylene ether glycol, an alicyclic diol such as 1,2-cyclohexanediol, 1,4-cyclohexanediol, 1,1-cyclohexanedimethylol, 1,4-cyclohexanedimethylol or 2,5-norbornanedimethylol, an aromatic diol such as xylylene glycol, 4,4'-dihydroxybiphenyl, 2,2-bis(4'-hydroxyphenyl)propane, 2,2-bis(4'-β-hydroxyethoxyphenyl)propane, bis(4-hydroxyphenyl)sulfone or bis(4-β-hydroxyethoxyphenyl)sulfonic acid, or an ethylene oxide addition product or propylene oxide addition product of 2,2-bis(4'-hydroxyphenyl)propane.

Further, as a copolymerizable component, a hydroxycarboxylic acid or an alkoxycarboxylic acid, such as glycolic acid, p-hydroxybenzoic acid or p-β-hydroxyethoxybenzoic acid, or a monofunctional component such as stearyl alcohol, heneicosanol, octacosanol, benzyl alcohol, stearic acid, behenic acid, benzoic acid, t-butylbenzoic acid or benzoylbenzoic acid, or a trifunctional or higher polyfunctional component such as tricarballylic acid, trimellitic acid, trimesic acid, pyromellitic acid, naphthalene tetracarboxylic acid, gallic acid, trimethylolethane, trimethylolpropane, glycerol, pentaerythritol or sugar ester, may, for example, be used.

Further, as the constituting components of the obtained polyester resin, it is preferred that the content of ethylene glycol units is at least 97.0 mol% based on the total diol component and the content of diethylene glycol units is at most 3.0 mol% based on the total diol component and/or that terephthalic acid units are at least 98.5 mol% based on the total dicarboxylic acid component, in view of the above-described mechanical strength, heat resistance, aroma-retention property, gas barrier properties etc.

The polyester resin of the present invention is a polyester resin obtained by polycondensation in the presence of (1) a compound of at least one element selected from the group consisting of titanium group elements of Group 4A of the periodic table (hereinafter sometimes referred to simply as titanium group elements), (2) a magnesium compound and (3) a phosphorus compound, **characterized in that** the contents as atoms derived from the respective compounds (1), (2) and (3) satisfy the following formulae (I) to (V), where the total amount of titanium group atoms of the compound (1) is T (mol/ton resin), the total amount of magnesium atoms of the compound (2) is M (mol/ton resin) and the total amount of phosphorus atoms of the compound (3) is P (mol/ton resin):

3

$$(I) \quad 0.020 \leq T \leq 0.200$$

$$(II) \quad 0.040 \leq M \leq 0.400$$

$$(III) \quad 0.020 \leq P \leq 0.300$$

$$(IV) \quad 0.50 \leq M/P \leq 3.00$$

$$(V) \quad 0.20 \leq M/T \leq 4.00$$

Here, the compound (1) of titanium group element of Group 4A of the periodic table, i.e. a compound of titanium, zirconium or hafnium, is preferably a titanium compound. As the titanium compound, specifically, tetra-n-propyl titanate, tetra-i-propyl titanate, tetra-n-butyl titanate, tetra-n-butyl titanate tetramer, tetra-t-butyl titanate, titanium acetate, titanium oxalate, titanium potassium oxalate, titanium sodium oxalate, potassium titanate, sodium titanate, titanium chloride or a titanium chloride/aluminum chloride mixture may, for example, be mentioned. Among them, a titanium alkoxide such as tetra-n-propyl titanate, tetra-i-propyl titanate or tetra-n-butyl titanate, titanium oxalate or titanium potassium oxalate is preferred. A solid type titanium compound which is insoluble in an organic solvent or water is not suitable.

Further, as the magnesium compound (2), specifically, magnesium oxide, magnesium hydroxide, magnesium alkoxide, magnesium acetate or magnesium carbonate may, for example, be mentioned, and among them, magnesium acetate is preferred.

Further, as the phosphorus compound (3), specifically, a pentavalent phosphorus compound such as orthophosphoric acid, polyphosphoric acid, or phosphate such as trimethyl phosphate, triethyl phosphate, tri-n-butyl phosphate, trioctyl phosphate, triphenyl phosphate, tricresyl phosphate, tris(triethylene glycol) phosphate, methyl acid phosphate, ethyl acid phosphate, isopropyl acid phosphate, butyl acid phosphate, monobutyl phosphate, dibutyl phosphate, dioctyl phosphate or triethylene glycol acid phosphate, or a trivalent phosphorus compound such as phosphorous acid, hypophosphorous acid, a phosphite such as trimethyl phosphite, diethyl phosphite, triethyl phosphite, trisdodecyl phosphite, tris(nonyldecyl) phosphite, ethyl diethyl phosphonoacetate or triphenyl phosphite, or a metal salt of e.g. lithium, sodium or potassium, may, for example, be mentioned. Among them, preferred is a phosphate of a pentavalent phosphorus compound with a view to controlling the polycondensation velocity, particularly preferred is trimethyl phosphate or ethyl acid phosphate.

Further, it is essential for the polyester resin of the present invention that the content as titanium group atoms derived from the above compound (1) of at least one element selected from the group consisting of titanium group elements of Group 4A of the periodic table satisfies the following formula (I), where the total amount of the titanium group atoms is T (mol/ton resin), and the lower limit is preferably 0.060, more preferably 0.070, and the upper limit is preferably 0.100, more preferably 0.090. The content of the titanium group atoms preferably satisfies the following formula (I'), more preferably satisfies the following formula (I"). If the above T is less than 0.020, the polycondensability tends to decrease, and if it exceeds 0.200, the color tone of the polyester resin tends to be yellowish, and the acetaldehyde content in the molded product tends to be high.

$$(I) \quad 0.020 \leq T \leq 0.200$$

$$(I') \quad 0.060 \leq T \leq 0.100$$

$$(I'') \quad 0.070 \leq T \leq 0.090$$

Further, it is essential for the polyester resin of the present invention that the content as magnesium atoms derived from the above magnesium compound (2) satisfies the following formula (II), where the total amount of the magnesium atoms is M (mol/ton resin), and the lower limit is preferably 0.060, more preferably 0.110, and the upper limit is preferably 0.300, more preferably 0.220. The content of the magnesium atoms preferably satisfies the following formula (II'), more preferably satisfies the following formula (II"). If the above M is less than 0.040, the polycondensability tends to decrease, and on the other hand, if it exceeds 0.400, the polycondensability, particularly the solid phase polycondensability tends to decrease.

$$(II) \quad 0.040 \leq M \leq 0.400$$

$$(II') \quad 0.060 \leq M \leq 0.300$$

$$(II'') \quad 0.110 \leq M \leq 0.220$$

Further, it is essential for the polyester resin of the present invention that the content as phosphorus atoms derived from the above phosphorus compound (3) satisfies the following formula (III), where the total amount of the phosphorus atoms is P (mol/ton resin), and the lower limit is preferably 0.050, more preferably 0.080, particularly preferably 0.090, and the upper limit is preferably 0.200, more preferably 0.180, particularly preferably 0.150. The content of the phosphorus atoms preferably satisfies the following formula (III'), more preferably satisfies the following formula (III"), particularly preferably satisfies the following formula (III"'). If the above P is less than 0.020, the acetaldehyde content in the polyester resin tends to be high, and on the other hand, if it exceeds 0.300, the polycondensability, particularly the solid phase polycondensability tends to decrease.

$$(III) \quad 0.020 \leq P \leq 0.300$$

$$(III') \quad 0.050 \leq P \leq 0.200$$

$$(III'') \quad 0.080 \leq P \leq 0.180$$

$$(III''') \quad 0.090 \leq P \leq 0.150$$

Further, it is essential for the polyester resin of the present invention that M/P satisfies the following formula (IV), in addition to the satisfaction of the above formulae (I) to (III), and the lower limit is preferably 0.90, more preferably 1.10, and the upper limit is preferably 1.80, more preferably 1.50. M/P preferably satisfies the following formula (IV'), more preferably satisfies the following formula (IV"). Further, it is essential that M/T satisfies the following formula (V), and the lower limit is preferably 0.50, more preferably 1.00, particularly preferably 1.50, and the upper limit is preferably 3.50, more preferably 2.90, particularly preferably 2.40. M/T preferably satisfies the following formula (V'), more preferably satisfies the following formula (V"), particularly preferably satisfies the following formula (V"'). If M/P or M/T is less than the left-side value of the following formula (IV) or (V), the polycondensability as the polyester resin tends to decrease, or the color tone tends to be yellowish, and on the other hand, if M/P or M/T exceeds the right-side value of the following formula (IV) or (V), the polycondensability, particularly the solid phase polycondensability tends to decrease, or the color tone tends to deteriorate.

$$(IV)\quad 0.50 \leq M/P \leq 3.00$$

$$(IV')\ 0.90 \leq M/P \leq 1.80$$

$$(IV'')\ 1.10 \leq M/P \leq 1.50$$

$$(V)\quad 0.20 \leq M/T \leq 4.00$$

$$(V')\quad 0.50 \leq M/T \leq 3.50$$

$$(V'')\quad 1.00 \leq M/T \leq 2.90$$

$$(V''')\ 1.50 \leq M/T \leq 2.40$$

Further, the polyester resin of the present invention is preferably such that P/M/T satisfies the following formula (VI) in addition to the satisfaction of the above formulae (I) to (V), and the lower limit is preferably 5.0, more preferably 8.0, and the upper limit is preferably 15.0, more preferably 12.0. P/M/T preferably satisfies the following formula (VI'), particularly preferably satisfies the following formula (VI"). If P/M/T is less than the left-side value of the following formula, the color tone as the polyester resin tends to be yellowish, and on the other hand, if it exceeds the right-side value of the following formula, the polycondensability, particularly the solid phase polycondensability tends to decrease.

$$(VI)\quad 3.0 \leq P/M/T \leq 19.0$$

$$(VI')\quad 5.0 \leq P/M/T \leq 15.0$$

$$(VI'')\quad 8.0 \leq P/M/T \leq 12.0$$

In the polyester resin of the present invention, the above contents and ratios as titanium group element, magnesium element and phosphorus element derived from the compound (1) of at least one element selected from the group consisting of titanium group elements of Group 4A of the periodic table, the magnesium compound (2) and the phosphorus compound (3), are in most suitable ranges also in view of e.g. the diethylene glycol content, the acetaldehyde content in the resin and in the molded product, the aroma-retention property, etc.

The polyester resin of the present invention preferably contains substantially no heavy metal such as antimony or cobalt, or germanium, in view of the above-described toxicity and economical efficiency. However, if they are contained, it is preferred that the content as antimony atoms is at most 0.10 mol/ton resin, the content as cobalt atoms is at most 0.10 mol/ton resin, and the content as germanium atoms is at most 0.15 mol/ton resin.

The polyester resin of the present invention is one obtained by polycondensing a dicarboxylic acid component containing terephthalic acid as the main component and a diol component containing ethylene glycol as the main component in the presence of the above compound (1) of at least one element selected from titanium group elements of Group 4A of the periodic table, the above magnesium compound (2) and the above phosphorus compound (3), via an esterification reaction. It can be produced by adjusting, in the polycondensation, the addition amounts of the above respective compounds (1), (2) and (3) to the reaction system to be such amounts that the contents as the respective atoms derived from the respective compounds per 1 ton of the obtained polyester resin satisfy the above formulae (I) to (V), preferably satisfy the above formula (VI) also.

The production process is basically in accordance with a conventional process for producing a polyester resin. Namely, a dicarboxylic acid component containing terephthalic acid as the main component and a diol component containing ethylene glycol as the main component, together with e.g. a copolymerizable component used as the case requires, are introduced into a slurry preparation tank and mixed with stirring to obtain a raw material slurry, which is subjected to an esterification reaction in an esterification reaction tank under atmospheric pressure or elevated pressure under heating, and the obtained polyester low molecular weight product as the esterification product is transported to a polycondensation tank and subjected to melt polycondensation in the presence of the above compounds under reduced pressure achieved by gradually reducing the pressure from atmospheric pressure under heating.

Preparation of the raw material slurry is carried out by mixing the dicarboxylic acid component containing terephthalic acid as the main component and the diol component containing ethylene glycol as the main component and e.g. the copolymerizable component used as the case requires, in a molar ratio of the diol component to the dicarboxylic acid component of preferably from 1.02 to 2.0, more preferably from 1.03 to 1.7.

Further, the esterification reaction is carried out by means of a single esterification reaction tank or a multi-stage reaction apparatus having a plurality of esterification reaction tanks connected in series, under reflux of ethylene glycol, while removing water formed by the reaction and excess ethylene glycol out of the system, until the esterification ratio (the proportion of the esterified by a reaction with the diol component among the total carboxyl groups of the raw material dicarboxylic acid component) reaches usually at least 90%, preferably at least 93%. Further, the number average molecular weight of the polyester low molecular weight product as the esterification product is preferably from 500 to 5,000.

With respect to the reaction conditions in the esterification reaction, in the case of a single esterification reaction tank, the temperature is usually at a level of from 240 to 280°C, the relative pressure to the atmospheric pressure is usually at a level of from 0 to 400 kPa (from 0 to 4 kg/cm$^2$G), and the reaction time is from about 1 to 10 hours with stirring. In the case of a plurality of esterification reaction tanks, the reaction temperature in the esterification reaction tank for the first stage is usually from 240 to 270°C, preferably from 245 to 265°C, and the relative pressure to the atmospheric pressure is usually from 5 to 300 kPa (from 0.05 to 3 kg/cm$^2$G), preferably from 10 to 200 kPa (from 0.1 to 2 kg/cm$^2$G), and the reaction temperature in the final stage is usually from 250 to 280°C, preferably from 255 to 275°C, and the relative pressure to the atmospheric pressure is usually from 0 to 150 kPa (from 0 to 1.5 kg/cm$^2$G), preferably from 0 to 130 kPa (from 0 to 1.3 kg/cm$^2$G).

Further, in the esterification reaction, it is possible to suppress production of diethylene glycol as a by-product from ethylene glycol, by adding a small amount of e.g. a tertiary amine such as triethylamine, tri-n-butylamine or benzyl dimethylamine, a quaternary ammonium hydroxide such as tetraethylammonium hydroxide, tetra-n-butylammonium hydroxide or trimethylbenzylammonium hydroxide, or a basic compound such as lithium carbonate, sodium carbonate, potassium carbonate or sodium acetate.

Further, the melt polycondensation is carried out under reduced pressure, while distilling off formed ethylene glycol out of the system, by means of a single melt polymerization tank, or a multi-stage reaction apparatus having a plurality of melt polycondensation tanks connected in series, for example, an apparatus comprising a perfect mixing type reactor equipped with stirring vanes for the first stage and horizontal plug flow type reactors equipped with stirring vanes for the second and third stages.

With respect to the reaction conditions in the melt polycondensation, in the case of a single polycondensation tank, the temperature is usually from about 250 to 290°C, the pressure is gradually reduced from the atmospheric pressure, so that finally, the absolute pressure will be usually at a level of from 1.3 to 0.013 kPa (from 10 to 0.1 Torr), and the reaction time is from about 1 to 20 hours with stirring. Whereas, in the case of a plurality of polycondensation tanks, the reaction temperature in the polycondensation tank for the first stage is usually from 250 to 290°C, preferably from 260 to 280°C, and the absolute pressure is usually from 65 to 1.3 kPa (from 500 to 10 Torr), preferably from 26 to 2 kPa (from 200 to 15 Torr), and the reaction temperature in the final stage is usually from 265 to 300°C, preferably from 270 to 295°C, and the absolute pressure is usually from 1.3 to 0.013 kPa (from 10 to 0.1 Torr), preferably from 0.65 to 0.065 kPa (from 5 to 0.5 Torr). The reaction conditions for an intermediate stage are selected to be intermediate conditions thereof, and for example, in a three stage reaction apparatus, the reaction temperature in the second stage is usually from 265 to 295°C, preferably from 270 to 285°C, and the absolute pressure is usually from 6.5 to 0.13 kPa (from 50 to 1 Torr), preferably from 4 to 0.26 kPa (from 30 to 2 Torr).

Further, at the time of polycondensation, timing for addition of the compound (1) of at least one element selected from the group consisting of titanium group elements of Group 1A of the periodic table, the magnesium compound (2) and the phosphorus compound (3), to the reaction system, may be at any one of optional stages of a step of preparing a slurry and an esterification reaction step, and the initial stage of the melt polycondensation step. However, the compounds (1) and (2) are added preferably in the esterification reaction step, or in the stage of transportation from the esterification reaction step to the melt polycondensation step, and it is also preferred that they are added at a stage where the esterification ratio reaches at least 90%. Further, it is preferred that the compound (1) is added later than the compound (2). Further, it is preferred that the compound (3) is added at a stage where the esterification ratio is less than 90%.

With respect to the specific steps for addition of the respective compounds, it is preferred, for example, that the compound (1) is added to the esterification reaction tank for the final stage in the multi-stage reaction apparatus or to the esterification reaction product in the stage for transportation from the esterification reaction tank to the melt polycondensation step, and the compound (2) is added to the esterification reaction tank for the final stage in the multi-stage reaction apparatus. Further, the compound (3) is preferably added to the slurry preparation tank or the esterification reaction tank for the first stage, particularly preferably to the slurry preparation tank. Namely, in the present invention, it is preferred to set the order of addition of the respective compounds (1), (2) and (3) to the reaction system to be (3) then (2) and then (1).

By setting the timing of addition and the order of addition of the respective compounds (1), (2) and (3) to the reaction system as mentioned above, the thermal stability of the resin can be improved, and production of diethylene glycol as a by-product in the reaction system which causes production of acetaldehyde, etc. as by-products during the melt molding, can be suppressed, and further, it is possible to effectively obtain the effects for improving the melt polycondensability and the solid phase polycondensability.

Further, addition of the respective compounds (1), (2) and (3) to the reaction system at the time of the polycondensation, is preferably carried out in the form of a solution in e.g. water or an alcohol such as ethylene glycol. In an ethylene glycol solution in a case where a titanium compound is used as the compound (1), it is preferred to adjust the concentration of titanium atoms to be from 0.01 to 0.3 wt% and the water concentration to be from 0.1 to 1 wt%, from the viewpoint of the dispersibility of the titanium compound in the reaction system and the improvement of the melt polycondensability and the solid phase polycondensability thereby obtainable.

Further, in the process for producing a polyester resin of the present invention, it is preferred that the compound of titanium group element is added to the reaction system in the form of an ethylene glycol solution having a concentration of titanium group atoms of from 0.01 to 0.3 wt% and a water concentration of from 0.1 to 1 wt%, the phosphorus compound in the form of an ethylene glycol solution having a concentration of phosphorus atoms of from 0.01 to 1 wt%, and the phosphorus compound in the form of an ethylene glycol solution having a concentration of phosphorus atoms of from 0.01 to 1 wt%, in view of dimensional accuracy at a mouth stopper portion when the obtained polyester resin is molded into bottles.

If the concentration of titanium group atoms in the ethylene glycol solution of the titanium group element compound is less than or exceeds the above range, the dimensional accuracy at a mouth stopper portion when the obtained polyester resin is molded into bottles tends to be poor, and the height of the mouth stopper portion tends to exceed the specified range (the mouth stopper portion height as represented by the vertical distance from the top of the mouth stopper portion to the bottom of the support ring within a range of 21.01±0.2 mm or 22.43±0.25 mm). Further, the melt polycondensation velocity and the solid phase polycondensation velocity as described hereinafter tend to decrease. Further, if the water concentration is less than or exceeds the above range, the dimensional accuracy at a mouth stopper portion when the obtained polyester resin is molded into bottles tends to be poor. If it is less than the above range, the height of the mouth stopper portion will not achieve the specified range, and on the other hand, if it exceeds the above range, the height of the mouth stopper portion tends to exceed the specified range.

Further, if the concentration of phosphorus atoms in the ethylene glycol solution of the phosphorus compound is less than or exceeds the above range, the dimensional accuracy at a mouth stopper portion when the obtained polyester resin is molded into bottles tends to be poor, and the height at the mouth stopper portion tends to exceed the specified range.

Further, the magnesium compound is also added to the reaction system preferably in the form of a solution of ethylene glycol, and preferably in the form of an ethylene glycol solution having a concentration of magnesium atoms of from 0.01 to 1 wt% and a water concentration of from 0.01 to 10 wt% in view of e.g. the polycondensability and the dimensional accuracy at a mouth stopper portion when bottles are molded.

The polyester resin obtainable by the above melt polycondensation is such that the intrinsic viscosity ($[\eta_1]$) is preferably from 0.35 to 0.75 dl/g, more preferably from 0.50 to 0.65 dl/g, as a value measured at 30˚C in a mixture of phenol/tetrachloroethane (weight ratio: 1/1). If the intrinsic viscosity ($[\eta_1]$) is less than the above range, the withdrawing property from the polycondensation tank, which will be described hereinafter, tends to be poor. On the other hand, if it exceeds the above range, it tends to be difficult to reduce the acetaldehyde content in the resulting resin.

The resin obtained by the melt polycondensation is usually withdrawn in the form of a strand from a discharge outlet provided at the bottom of the polycondensation tank and, while being cooled by water or after being cooled by water, cut by a cutter into particles such as pellets or chips. Further, such particles after the melt polycondensation are preferably subjected to solid phase polycondensation by heating them in an atmosphere of an inert gas such as nitrogen, carbon dioxide or argon, under an elevated pressure of usually at most 100 kPa (1 kg/cm$^2$G), preferably at most 20 kPa (0.2 kg/cm$^2$G) as a relative pressure to the atmospheric pressure usually for a level of from 5 to 30 hours, or under reduced pressure of usually from 6.5 to 0.013 kPa (from 50 to 0.1 Torr), preferably from 1.3 to 0.065 kPa (from 10 to 0.5 Torr) as an absolute pressure usually for a level of from 1 to 20 hours, at a temperature of usually from 190 to 230°C, preferably from 195 to 225°C. By this solid phase polycondensation, it is possible to further increase the polymerization degree and to reduce the amount of by-products such as acetaldehyde.

At that time, prior to the solid phase polycondensation, it is preferred to heat the resin particles in an atmosphere of an inert gas, in a steam atmosphere or in a steam-containing inert gas atmosphere usually at from 120 to 200°C, preferably at from 130 to 190°C for a level of from 1 minute to 4 hours, to crystallize the surface of the resin particles. Particularly, it is preferred to carry out the heating in a steam atmosphere, whereby the crystallization rate of the resin particles can be improved, or the acetaldehyde content in the obtained polyester resin may further be reduced.

The polyester resin obtained by the solid phase polycondensation has an intrinsic viscosity ([η$_2$]) of preferably from 0.70 to 0.90 dl/g, more preferably from 0.73 to 0.85 dl/g, as a value measured at 30°C in a solvent of phenol/ tetrachloroethane (weight ratio 1/1). If the intrinsic viscosity ([η$_2$]) is less than the above range, the mechanical strength tends to be inadequate as molded products such as bottles. On the other hand, if it exceeds the above range, it tends to be difficult to suppress formation of acetaldehyde etc. as by-products at the time of the melt molding. Further, the solid phase polycondensation velocity (V) as a value obtained by dividing the difference ([η$_2$]-[η$_1$]) between the intrinsic viscosity ([η$_2$]) of the obtained solid phase polycondensed resin and the intrinsic viscosity ([η$_1$]) of the melt polycondensed resin, by the reaction time, is preferably from 0.008 to 0.030 dl/g/hr, more preferably from 0.015 to 0.030 dl/g/hr.

Further, it is possible to deactivate the catalyst used for polycondensation by subjecting the resin obtained by the above melt polycondensation or solid phase polycondensation to water treatment of dipping it in warm water of at least 40°C for at least 10 minutes, or steam treatment of contacting it with steam or a steam-containing gas of at least 60°C for at least 30 minutes, or treatment with an organic solvent, treatment with an aqueous acidic solution of e.g. various mineral acids, organic acids or phosphoric acid, or treatment with an alkaline aqueous or organic solution of e.g. a metal of Group 1A or 2A or an amine.

Further, in the process for producing a polyester resin of the present invention, for the purpose of adjusting the temperature-rising crystallization temperature of the obtained resin as described hereinafter, a crystalline thermoplastic resin different from the polyester resin may be contained in a content of from 0.0001 to 1,000 ppm, preferably from 0.0005 to 100 ppm, more preferably from 0.001 to 10 ppm, as the case requires. As such a crystalline thermoplastic resin, a polyolefin resin or a polyamide resin may be mentioned as a typical example.

As a method of incorporating such a polyolefin resin, a polyamide resin or such a crystalline thermoplastic resin into the polyester resin, a method as disclosed in JP-A-2002-3708 may, for example, be employed.

The polyester resin of the present invention has a color coordinate value b of the Hunter's color difference formula in the Lab color system as disclosed in Reference 1 of JIS Z8730, of at most 1.0. The lower limit is usually at a level of -3.0. Further, it has a psychometric lightness value L of at least 80, preferably at least 83. The upper limit of the value L is usually 100.

In order that the color coordinate value b will be within the above range, a so-called organic toning agent is added. Such an organic toning agent may, for example, be an organic toning agent such as an anthraquinone type compound, an isoquinoline type compound, a phthalocyanine type compound, a perinone type compound, an azo type compound or a quinocridone type compound. For example, a dye or pigment such as Solvent Blue 104, 97 or 122, Solvent Red 135, 179, 195 or 52, Solvent Violet 36, Pigment Blue 29, 15:1, 15:2 or 15:3, Pigment Red 187, 177, 202, 220 or 263, or Pigment Violet 19 may, for example, be mentioned. Among them, preferred as the organic toning agent is an anthraquinone type compound or a perinone type compound, more preferred as the organic toning agent is Solvent Blue 97 or 104 or Solvent Red 135 or 195, and particularly preferred is Solvent Blue 104 and/or Solvent Red 135. The addition amount of the organic toning agent is preferably at most 3.0 ppm, more preferably at most 2.0 ppm, particularly preferably at most 1.5 ppm, especially preferably at most 1.0 ppm, with a view to suppressing the decrease in the psychometric lightness value L. The timing of addition of the organic toning agent may be at any one of from the step of producing the polyester resin to the molding step.

The organic toning agent is not soluble in a glycol as a raw material of the polyester, or in a solvent having high affinity with the polyester reaction liquid, such as water, in general, and accordingly it is added as a dispersion.

For production of the polyester resin by adding the organic toning agent dispersion, it is preferred that the organic toning agent dispersion is optionally sampled from e.g. a preparation tank therefor, the organic toning agent dispersion and an organic solvent are brought into contact with each other so that the organic toning agent is extracted with the organic solvent, the absorbance of the obtained extracted solution is measured to quantitatively analyze the concentration of the organic toning agent in the dispersion, and based on the result, the amount of supply of the organic toning agent dispersion and/or the preparation concentration of the organic toning agent dispersion are controlled so that the addition amount of the organic toning agent will be a predetermined amount based on the formed polymer.

In the present invention, the dispersing medium for the organic toning agent is preferably a glycol as a raw material of the polyester or a solvent having high affinity with the polyester reaction liquid, such as water. In a case of polyethylene terephthalate for example, the dispersing medium is ethylene glycol or water. The concentration of the organic toning agent in the organic toning agent dispersion is optionally selected depending upon the purpose of use.

The concentration of the organic toning agent is quantitatively analyzed by contacting the organic toning agent dispersion with an organic solvent, extracting the organic toning agent into the organic solvent, and measuring the absorbance of the obtained extracted solution.

It is essential for the organic solvent into which the organic toning agent in extracted to provide high solubility for the organic toning agent and have low compatibility with the dispersing medium. Further, a solvent which is highly volatile such as methylene chloride is unsuitable since the extraction concentration changes during the quantitative determination operation, whereby the analysis accuracy tends to deteriorate. Accordingly, as the organic solvent, chloroform, toluene, 1,1,1,3,3,3-hexafluoroisopropanol or the like. is selected. Among them, chloroform or toluene is preferred, and chloroform is particularly preferred in view of solubility of the organic toning agent.

The amount of the organic solvent used is selected from a range within which the extraction concentration at which a suitable absorbance is obtained will be obtained. It is usually from 1 to 1,000 times, preferably from 1 to 100 times the weight of the organic toning agent dispersion. Further, as the extraction temperature, room temperature is sufficient, and the extraction time is usually from 5 to 10 minutes. The extraction operation is carried out usually by using a shaker.

The concentration is quantitatively analyzed based on a preliminarily prepared analytical formula. The analytical formula is prepared by preparing organic toning agent dispersions at several concentrations, extracting them with the organic solvent, and measuring the absorbances of the obtained extracted solutions to obtain the relation between the organic toning agent concentration and the absorbance. Even when two or more organic toning agents are contained in the organic toning agent dispersion, all the concentration of the organic toning agents contained can be quantitatively analyzed by measurement of the absorbance all at once.

The organic toning agent dispersion is preferably withdrawn from an organic toning agent preparation tank therefore circulated to the preparation tank, and branched from the middle of a circulation pipe so that it is added to the polyester raw material or the polyester reaction liquid. At that time, the withdrawal linear velocity and the linear velocity during circulation of the organic toning agent dispersion are preferably at least 1.8 m/sec, more preferably at least 2.0 m/sec, in order to prevent sedimentation of organic toning agent particles. If the linear velocity is less than 1.8 m/sec, the organic toning agent particles tend to sediment during the circulation, and the organic toning agent concentration in the organic toning agent dispersion changes, and resultingly, the color tone of the polymer will not be stable. Further, the linear velocity is preferably at most 10 m/sec as a range in which stable operation is possible industrially.

The organic toning agent preparation tank is a tank in which the organic toning agent is dispersed in a dispersing medium such as a glycol to prepare a dispersion. In a case where an organic toning agent storage tank to store the prepared organic toning agent dispersion is used separately from the preparation tank, the organic toning agent storage tank is also included.

The organic toning agent preparation tank has a circulation pipe on the outside. The shape of the circulation pipe is not particularly limited, however, the shape is preferably a shape with no acute-angled flexing portion or pocket portion so that the linear velocity of the organic toning agent dispersion during circulation can be maintained. Further, the branching position from the circulation pipe to add the dispersion to the polyester raw material or the polyester reaction liquid is not particularly limited, however, since the linear velocity after branching tends to be low, there is possibility that the organic toning agent particles sediment after branching, and accordingly the position is preferably such that the distance to the addition inlet is as short as possible.

The position of addition of the organic toning agent dispersion to the polyester raw material or the polyester reaction liquid may be at any stage in the process for producing the polyester. However, if the organic toning agent dispersion is added when the esterification ratio (the proportion of the esterified by a reaction with the diol component among the total carboxyl groups of the raw material dicarboxylic acid component) is less than 90%, the color tone of the formed polymer tends to be greenish. Accordingly, it is preferred to add the dispersion to the polyester reaction liquid with an esterification ratio of at least 90%.

As the specific step of adding the organic toning agent, the organic toning agent dispersion is preferably added to the esterification reaction tank for the final stage in the multi-stage reaction apparatus or to the esterification product in the stage for transportation from the esterification reaction tank to the melt polycondensation tank.

The concentration of the organic toning agent dispersion is not particular limited, however, if the concentration is too high, the linear velocity after branched from the circulation pipe tends to be remarkably low, whereby the organic toning agent particles will sediment, and on the other hand, if the concentration is too low, the amount of the dispersing medium added to the polyester raw material or the polyester reaction liquid tends to be large, and the esterification ratio or the alcohol component copolymerization amount will be influenced. Accordingly, it is preferably from 0.01 to 0.5 wt%, particularly preferably from 0.02 to 0.2 wt%.

The median diameter of the organic toning agent particles in the organic toning agent dispersion is preferably at most 15 $\mu$m, more preferably at most 10 $\mu$m, in order to prevent sedimentation of the organic toning agent particles. The smaller the median diameter of the organic toning agent particles, the more the possibility of clogging of e.g. a filter disposed in an addition pipe or a control valve for adjusting the addition flow amount will be decreased, such being particularly preferred.

Further, the polyester resin of the present invention has a haze of preferably at most 5.0%, more preferably at most 3.0%, in the form of a molded plate having a thickness of 5 mm formed by injection molding at 280°C. Further, it has a haze of preferably at most 40%, more preferably at most 20%, particularly preferably at most 10%, in the form of a molded plate having a thickness of 5 mm formed by injection molding at 270°C.

Further, the polyester resin obtained by the production process of the present invention preferably has a temperature-rising crystallization temperature of from 160 to 180°C and a temperature-lowering crystallization temperature of from 150 to 200°C in the form of a molded product formed by injection molding at 280°C. If the temperature-rising crystallization temperature or the temperature-lowering crystallization temperature is out of the above range, the dimensional accuracy at a mouth stopper portion when the resin is molded into bottles tends to be poor, and the height at the mouth stopper portion tends to hardly achieve the specified range. The temperature-rising crystallization temperature and the temperature-lowering crystallization temperature are obtained by measuring crystallization peak temperatures observed during a temperature-rising step and a temperature-lowering step, respectively, by increasing the temperature from 20°C to 285°C at a rate of 20°C/min, maintaining the molten state at 285°C for 5 minutes and lowering the temperature to 20°C at a rate of 20°C/min, in a stream of nitrogen by means of a differential scanning calorimeter.

Further, the polyester resin of the present invention has an aldehyde content of preferably at most 3.0 ppm, more preferably at most 2.0 ppm, with a view to suppressing bad influences of molded products such as bottles over e.g. taste and flavor of a content. The acetaldehyde content in a molded product formed by injection molding at 280°C is preferably at most 23 ppm, more preferably at most 20 ppm, particularly preferably at most 18 ppm, especially preferably at most 15 ppm.

Further, the polyester resin of the present invention has a cyclic trimer content of preferably at most 0.60 wt%, more preferably at most 0.50 wt%, with a view to preventing a mold from being stained at the time of molding of e.g. bottles and imparting transparency to the molded products. The content is more preferably at most 0.40 wt%, particularly preferably at most 0.30 wt%.

Further, among the polyester resins of the present invention, one which has an intrinsic viscosity of at least 0.7 dl/g and a density of at least 1.38 g/cm$^3$, and of which the color coordinate value b of the Hunter's color difference formula in the Lab color system, after heat treatment in the air at 180°C for 4 hours, decreases from the value before the heat treatment, may be mentioned as a preferred example. If the intrinsic viscosity is lower than 0.7 dl/g, the mechanical strength tends to be inadequate as molded products such as bottles, and if the density is lower than 1.38 g/cm$^3$, fusion of the polyester resins tends to occur in the heat treatment step prior to the melt molding. The intrinsic viscosity is usually at most 1.0 dl/g, and the density is usually at most 1.44 g/cm$^3$. Particularly preferred is a polyester of which the above values b before and after the above heat treatment satisfy the following formula:

$$\text{Decrease in value b} = (\text{color coordinate value b of the Hunter's color difference formula before heat treatment}) - (\text{color coordinate value b of Hunter's color difference formula after heat treatment}) \geq 0.5$$

If the color coordinate value b of the Hunter's color difference formula after heat treatment in the air for 4 hours is higher than the value before the heat treatment, the obtained molded product tends to be significantly yellowish. The decrease in value b is preferably at least 0.7. The upper limit of the decrease is usually at most 1.0. A polyester resin of which the value b decreases by the heat treatment can be obtained by contriving particularly the type and the amount of use of the catalyst described above.

The polyester resin of the present invention may, for example, be molded into a preform by injection molding, followed by stretch blow molding, or molded into a parison by extrusion, followed by blow molding, to obtain a bottle or the like, or it may be formed into a sheet by extrusion, followed by heat forming to obtain a tray, a container or the like, or said sheet may be biaxially stretched to obtain a film or the like, which will be particularly useful in the field of packaging food and beverage products. Among them, it is particularly suitable for molding the preform obtained by injection molding into a bottle by a biaxially stretching blow molding method, and it is suitable, for example, for a container for e.g. a carbonated beverage, an alcoholic beverage, or a liquid seasoning such as soy sauce, a regular sauce, Japanese sweet rice wine for cooking or dressing, or after heat setting, for a container for a beverage such as a fruit juice beverage, a vitamin beverage, a flavor tea or mineral water.

EXAMPLES

Now, the present invention will be described in further detail with reference to Examples.

EXAMPLE 1

Using a continuous polymerization apparatus comprising a slurry preparation tank, esterification reaction tanks of two stages connected in series thereto and melt polycondensation tanks of three stages connected in series to the second stage esterification reaction tank, terephthalic acid and ethylene glycol were continuously supplied in a weight ratio of 865:485 to the slurry preparation tank, and a 0.3 wt% ethylene glycol solution of ethyl acid phosphate was continuously added in such an amount that the total amount P as phosphorus atoms per 1 ton of the formed polyester resin would be 0.161 mol/ton resin, followed by stirring and mixing to prepare a slurry. This slurry was continuously transported to the first stage esterification reaction tank set for an average retention time of 4 hours in a nitrogen atmosphere at 260˚C under a relative pressure of 50 kPa (0.5 kg/cm$^2$G) and then to the second stage esterification reaction tank set for an average retention time of 1.5 hours in a nitrogen atmosphere at 260˚C under a relative pressure of 5 kPa (0.05 kg/cm$^2$G), to carry out the esterification reaction. At that time, the esterification ratio as measured by the following method, was 85% in the first stage and 95% in the second stage.

(Average Esterification Ratio)

With respect to a solution having a sample dissolved at a concentration of 3 wt% in a mixed solvent of deuterated chloroform/hexafluoroisopropanol (weight ratio: 7/3), $^1$H-NMR was measured by a nuclear magnetic resonance apparatus ("JNM-EX270 model", manufactured by JEOL Ltd.), and each peak was identified. The amount of terminal carboxyl groups (A mol/ton sample) was calculated from the integral value of the peak, and by the following formula, the esterification ratio (E%) was calculated as a proportion of the esterified among all carboxyl groups of terephthalic acid units.

$$\texttt{Esterification ratio (E) = [1-A/\{(1,000,000/192.2) \times 2\}] \times 100}$$

Further, at that time, via an upper pipe provided at the second stage, a 0.6 wt% ethylene glycol solution of magnesium acetate tetrahydrate was continuously added in such an amount that the total amount M as magnesium atoms per 1 ton of the formed polyester resin would be 0.206 mol/ton resin.
Continuously, at the time of transporting the esterification reaction product obtained as described above to the melt polycondensation tank, tetra-n-butyl titanate in the form of an ethylene glycol solution having a concentration of titanium atoms of 0.15 wt% and a water concentration of 0.5 wt%, was continuously added to the esterification reaction product in the transportation pipe in such an amount that the total amount T as titanium atoms per 1 ton of the formed polyester resin would be 0.104 mol/ton resin, and the esterification reaction product was continuously transported to the first stage melt polycondensation tank set at 270˚C under an absolute pressure of 2.6 kPa (20 Torr), then to the second stage melt polycondensation tank set at 278˚C under an absolute pressure of 0.5 kPa (4 Torr) and then to the third stage melt polycondensation tank set at 280˚C under an absolute pressure of 0.3 kPa (2 Torr), to carry out the melt polycondensation by adjusting the retention times in the respective polycondensation tanks so that the intrinsic viscosity ($[\eta_1]$) of the obtained polyester resin would be 0.60 dl/g, whereupon the product was continuously withdrawn in the form of a strand from a discharge outlet provided at the bottom of the polycondensation tank, cooled with water and then cut by a cutter to obtain a polyester resin in the form of chips.
Then, the polyester resin chips obtained as described above were continuously supplied for crystallization to an agitation crystallizer held at about 160˚C in a nitrogen atmosphere so that the retention time would be about 60 minutes and then continuously supplied to a tower type solid phase polycondensation apparatus and subjected to solid phase polycondensation at 210˚C in a nitrogen atmosphere by adjusting the retention time so that the intrinsic viscosity ($[\eta_2]$) of the obtained polyester resin would be 0.83 dl/g. The intrinsic viscosity ($[\eta_1]$) of the above melt polycondensed resin and the intrinsic viscosity ($[\eta_2]$) of the solid phase polycondensed resin, were measured by the following method. Further, the solid phase polycondensation velocity (V) was calculated from the results by the following method, and the results are shown in Table 1.

(Intrinsic Viscosity $[\eta_1]$, $[\eta_2]$)

0.50 g of a freeze-pulverized polyester pellet sample in the form of resin particles was dissolved at a concentration (c) of 1.0 g/dl in a mixed solvent of phenol/1,1,2,2-tetrachloroethane (weight ratio: 1/1). A melt polycondensate resin was dissolved at 110°C over a period of 20 minutes, and a solid phase polycondensate resin was dissolved at 120°C over a period of 20 minutes. Then, by means of an Ubbellohde capillary viscometer, the relative viscosity ($\eta$rel) to the solvent was measured at 30°C, and a ratio ($\eta$sp/c) of the specific viscosity ($\eta$sp) obtained from this relative viscosity ($\eta$rel)-1, to the concentration (c), was obtained. In a similar manner, the corresponding ratios ($\eta$sp/c) were obtained when the concentration (c) was 0.5 g/dl, 0.2 g/dl and 0.1 g/dl, respectively. From these values, a ratio ($\eta$sp/c) when the concentration (c) was extrapolated to be 0, was obtained as the intrinsic viscosity [$\eta$] (dl/g).

(Solid Phase Polycondensation Velocity (V))

It was calculated as a value obtained by dividing the difference $[\eta_2]$-$[\eta_1]$ between the intrinsic viscosity ($[\eta_2]$) of the solid phase polycondensed resin and the intrinsic viscosity ($[\eta_1]$) of the melt polycondensed resin, by the solid phase polycondensation time.

Further, with respect to the obtained solid phase polycondensed resin chips, the total amount T (mol/ton resin) of titanium atoms, the total amount M (mol/ton resin) of magnesium atoms and the total amount P (mol/ton resin) of phosphorus atoms were measured by the following methods. Further, from the results, M/P, M/T and P/M/T values were calculated, and the results are shown in Table 1.

(Contents of Metal Atoms)

5 g of a resin sample was ashed and completely decomposed by hydrogen peroxide in the presence of sulfuric acid in accordance with a usual method and then adjusted by distilled water to a constant volume of 50 ml, and with respect to this sample, quantitative analysis was carried out by means of a plasma emission spectrometer (ICP-AES "JY46P model", manufactured by JOBIN YVON COMPANY), whereupon the molar amount per 1 ton of the polyester resin was calculated.

Further, with respect to the obtained solid phase polycondensed resin chips, the diethylene glycol copolymerization amount, the color coordinate value b and the psychometric lightness value L as the color tone, and the acetaldehyde content were measured by the following methods, and the results are shown in Table 1.

(Content of Copolymerizable Component)

With respect to a solution having a resin sample dissolved at a concentration of 3 wt% in a mixed solvent of deuterated chloroform/hexafluoroisopropanol (weight ratio: 7/3), $^1$H-NMR was measured by a nuclear magnetic resonance apparatus ("JNM-EX270 model", manufactured by JEOL Ltd.), and the respective peaks were identified, whereupon from the integral value of a peak, the content of the copolymerizable component was calculated.

(Color Tone)

A resin sample was filled into a cylindrical powder colorimetric cell having an inner diameter of 36 mm and a depth of 15 mm to be flush, and by means of a colorimetric color difference meter ("ND-300A", manufactured by NIPPON DENSHOKU INDUSTRIES CO., LTD.), the color coordinate value b and the psychometric lightness value L of the Hunter's color difference formula in the Lab color system as disclosed in Reference 1 of JIS Z8730, were obtained as a simple average value of values measured at four positions by rotating the cell every 90° by a reflection method.

As the meaning of the respective values, a high psychometric lightness value L indicates a bright color tone, a minus color coordinate value a indicates deep green and on the contrary a plus color coordinate value a indicates deep red, and further, a minus color coordinate value b indicates deep blue and on the contrary a plus color coordinate value b represents deep yellow.

(Acetaldehyde Content)

5.0 g of a resin sample was accurately weighed and sealed in together with 10 ml of pure water in a micro bomb having an internal capacity of 50 ml under sealing with nitrogen, whereupon heat extraction was carried out at 160˚C for 2 hours. The amount of acetaldehyde in the extracted solution was quantitatively analyzed by gas chromatography ("GC-14A", manufactured by Shimadzu Corporation) using isobutyl alcohol as the internal standard.

Then, the obtained resin was dried at 160˚C for 4 hours in a nitrogen stream of 40 $\ell$/min in an inert oven ("IPHH-201 model", manufactured by ESPEC COMPANY), and then, by an injection molding machine ("M-70AII-DM", manufactured by Meiki Co., Ltd.), a stepped molded plate having the shape as shown in Fig. 1 and having a size of 50 mm × 100 mm and thicknesses of six steps ranging from 6 mm to 3.5 mm in a transverse direction with each step being 0.5 mm, was injection-molded at a cylinder temperature of 280˚C under a back pressure of $5 \times 10^5$ Pa at an injection rate of 40 cc/sec under a dwell pressure of $35 \times 10^5$ Pa at a mold temperature of 25˚C with a molding cycle of about 75 seconds. In Fig. 1, G indicates a gate portion.

With respect to the obtained molded plate, the haze and the acetaldehyde content were measured by the following methods. The results are shown in Table 1.

(Haze)

With respect to the portion having a thickness of 5.0 mm (portion C in Fig. 1) in the molded plate, the haze was measured by means of a haze meter ("NDH-300A", manufactured by NIPPON DENSHOKU INDUSTRIES CO., LTD.).

(Acetaldehyde Content)

Using samples cut out in the form of chips of about 4 × 4 mm from the rear end portion having a thickness of 3.5 mm (portion B in Fig. 1) in the molded plate, the measurement was carried out by the same method as described above.

Separately, the obtained polyester resin chips were dried at 130˚C for 10 hours in a vacuum dryer. Then, by an injection molding machine ("FE-80S", manufactured by Nissei Plastic Industrial Co., Ltd.), a preform of a test tube shape having an outer diameter of 29.0 mm, a height of 165 mm, an average wall thickness of 3.7 mm and a weight of 60g, was injection-molded at a cylinder temperature of 280˚C under a back pressure of $5 \times 10^5$ Pa at an injection rate of 45 cc/sec under a dwell pressure of $30 \times 10^5$ Pa at a mold temperature of 20˚C with a molding cycle of about 40 seconds.

The obtained preform was heated for 70 seconds in a near infrared ray irradiation furnace equipped with a quartz heater and then left to stand at room temperature for 25 seconds. Then, it was introduced into a blow mold set at 160˚C and while stretching in the height direction by a stretching rod, blow-molded under a blow pressure of $7 \times 10^5$ Pa for one second and further under a blow pressure of $30 \times 10^5$ Pa for 40 seconds, heat-set and cooled in air to mold 500 bottles having an outer diameter of about 95 mm, a height of about 305 mm, an average wall thickness of the body portion of about 0.37 mm, a weight of about 60g and an internal capacity of about 1.5$\ell$.

With respect to the obtained bottles, the aroma-retention property was evaluated by the following method, and the results are shown in Table 1.

(Aroma-Retention Property of bottles)

In obtained 498th to 500th bottles, a 100% orange juice was filled in a hot state, tightly sealed with a cap and stored at 10˚C for one month, whereupon the cap was removed, and the aroma was subjected to a sensory test by comparing it with a case where the orange juice was stored under the same conditions in a glass bottle, whereby evaluation was made under the following standards.

O: there was no difference in aroma from the glass bottle, and the aroma-retention property was good.

Δ: the aroma was weak as compared with the glass bottle, and the aroma-retention property was slightly poor.

×: the aroma was extremely weak as compared with the glass bottle, and the aroma-retention property was inferior.

EXAMPLE 1a

In the same manner as in Example 1 except that Solvent Blue 104 ("Polysynthrene Blue RBL" manufactured by Clariant K.K.) and Solvent Red 135 ("Sandplast Red G" manufactured by Clariant K.K.) as organic toning agents were continuously added to the slurry preparation tank each in an amount of 1.50 ppm per theoretical yield of the polyester resin, a solid phase polycondensed resin was produced, the color tone was measured, and the results are shown in Table 1.

COMPARATIVE EXAMPLES 1 and 1a

In the same manner as in Examples 1 and 1a, respectively, except that the amounts of addition of the catalysts at the time of polycondensation were as shown in Table 1, and the amounts of addition of the organic toning agents were changed to the amounts as shown in Table 1, solid phase polycondensed resins were produced, various measurements were carried out, and the results are shown in Table 1.

EXAMPLES 2 and 2a

In the same manner as in Examples 1 and 1a, respectively, except that the amounts of addition of the catalysts at the time of polycondensation were as shown in Table 1, solid phase polycondensed resins were produced, various measurements were carried out, and the results are shown in Table 1.

EXAMPLES 3-1 to 3-16 and 3-4a and COMPARATIVE EXAMPLES 2-1 to 2-6

In the same manner as in Examples 1 and 1a, respectively, except that the amounts of addition of the catalysts at the time of polycondensation were as shown in Table 1, the intrinsic viscosity of the solid phase polycondensed resin was as shown in Table 1, and the amounts of addition of the organic toning agents were changed to the amounts as shown in Table 1, solid phase polycondensed resins were produced, various measurements were carried out, and the results are shown in Table 1.

EXAMPLES 4-1 to 4-7 and 4-2a

In the same manner as in Examples 1 and 1a, respectively, except that the amounts of addition of the catalysts at the time of polycondensation were as shown in Table 1, and the amounts of addition of the organic toning agents were changed to the amounts as shown in Table 1, solid phase polycondensed resins were produced, various measurements were carried out, and the results are shown in Table 1.

EXAMPLES 5-1 to 5-4 and 5-1a

In the same manner as in Examples 1 and 1a, respectively, except that the amounts of addition of the catalysts at the time of polycondensation were as shown in Table 1, the intrinsic viscosity of the solid phase polycondensed resin was as shown in Table 1, and the amounts of addition of the organic toning agents were changed to the amounts as shown in Table 1, solid phase polycondensed resins were produced, various measurements were carried out, and the results are shown in Table 1.

EXAMPLES 6 and 6a to 6c

In the same manner as in Examples 1 and 1a, respectively, except that the amounts of addition of the catalysts at the time of polycondensation were as shown in Table 1, the intrinsic viscosity of the solid phase polycondensed resin was as shown in Table 1, and the amounts of addition of the organic toning agents were changed to the amounts as shown in Table 1, solid phase polycondensed resins were produced, various measurements were carried out, and the results are shown in Table 1.

COMPARATIVE EXAMPLE 3

In the same manner as in Example 1 except that sodium acetate in an amount as shown in Table 1 was used instead of magnesium acetate tetrahydrate, and the amounts of addition of the other catalysts and the intrinsic viscosity of the solid phase polycondensed resin were as shown in Table 1, a solid phase polycondensed resin was produced, various measurements were carried out, and the results are shown in Table 1.

COMPARATIVE EXAMPLE 4

In the same manner as in Example 1 except that lithium acetate in an amount as shown in Table 1 was used instead of magnesium acetate tetrahydrate, and the amounts of addition of the other catalysts and the intrinsic viscosity of the solid phase polycondensed resin were as shown in Table 1, a solid phase polycondensed resin was produced, various measurements were carried out, and the results are shown in Table 1.

COMPARATIVE EXAMPLE 5

In the same manner as in Example 1 except that sodium acetate and orthophosphoric acid were used each in an amount as shown in Table 1 instead of magnesium acetate tetrahydrate and ethyl acid phosphate, respectively, the amounts of addition of the other catalysts and the intrinsic viscosity of the solid phase polycondensed resin were as shown in Table 1, a solid phase polycondensed resin was produced, various measurements were carried out, and the results are shown in Table 1.

COMPARATIVE EXAMPLES 6 and 6a

In the same manner as in Examples 1 and 1a, respectively, except that amorphous titanium oxide (manufactured by Wako Pure Chemical Industries, Ltd., molar ratio of titanium to hydroxyl groups as measured by a method as disclosed in JP-A-2001-81161 of 1: 0.15) was used in an amount as shown in Table 1 instead of tetra-n-butyl titanate, and the amounts of addition of the other catalysts and the amounts of addition of the organic toning agents were as shown in Table 1, solid phase polycondensed resins were produced, various measurements were carried out, and the results are shown in Table 1.

COMPARATIVE EXAMPLE 7

In the same manner as in Example 1 except that no ethyl acid phosphate was used, potassium acetate and cobalt acetate were used instead of magnesium acetate tetrahydrate, and acetyl acetone titanyl was used instead of tetra-n-butyl titanate, each in an amount as shown in Table 1, and the intrinsic viscosity of the solid phase polycondensed resin was as shown in Table 1, a solid phase polycondensed resin was produced, various measurements were carried out, and the results are shown in Table 1.

TABLE 1

| | | Ex. | | Comp. Ex. | | Ex. | | |
|---|---|---|---|---|---|---|---|---|
| | | 1 | 1a | 1 | 1a | 2 | 2a | 3-1 |
| Melt polycondensed resin | Intrinsic viscosity $[\eta_1]$ (dl/g) | 0.60 | 0.60 | 0.60 | 0.60 | 0.60 | 0.60 | 0.60 |
| Solid phase polycondensed resin | Intrinsic viscosity $[\eta_2]$ (dl/g) | 0.83 | 0.83 | 0.83 | 0.83 | 0.83 | 0.83 | 0.83 |
| | Polycondensation velocity (V) (dl/g/hr) | 0.025 | 0.025 | 0.013 | 0.013 | 0.024 | 0.024 | 0.016 |
| | Content of titanium atoms (T) (mol/t) | 0.104 | 0.104 | 0.104 | 0.104 | 0.094 | 0.094 | 0.084 |
| | Content of magnesium atoms (M) (mol/t) | 0.206 | 0.206 | 0.103 | 0.103 | 0.185 | 0.185 | 0.041 |
| | Content of phosphorus atoms (P) (mol/t) | 0.161 | 0.161 | 0.210 | 0.210 | 0.145 | 0.145 | 0.032 |
| | M/P (mol/mol) | 1.274 | 1.274 | 0.490 | 0.490 | 1.274 | 1.274 | 1.274 |
| | M/T (mol/mol) | 1.970 | 1.970 | 0.985 | 0.985 | 1.970 | 1.970 | 0.492 |
| | P/M/T (mol/mol/mol) | 7.5 | 7.5 | 19.5 | 19.5 | 8.3 | 8.3 | 9.4 |
| | Diethylene glycol content (mol%) | 2.2 | – | 2.8 | – | 2.0 | – | 2.4 |
| | Color coordinate b | +3.9 | – | +4.7 | – | +3.5 | – | +3.8 |
| | Psychometric lightness L | 90 | – | 90 | – | 90 | – | 89 |
| | Acetaldehyde content (ppm) | 0.7 | – | 4.4 | – | 0.9 | – | 1.9 |
| | Toning agent addition amount | | | | | | | |
| | Blue (ppm) | | 1.50 | | 2.00 | | 1.50 | |
| | Red (ppm) | | 1.50 | | 2.00 | | 1.50 | |
| | Color coordinate b | – | +0.1 | – | -0.1 | – | -0.3 | – |
| | Psychometric lightness L | – | 80 | – | 78 | – | 81 | – |
| Molded plate | Haze (%) | 3.4 | – | 8.9 | – | 2.5 | – | – |
| | Acetaldehyde content (ppm) | 22 | – | 26 | – | 21 | – | 21 |
| Bottle | Aroma-retention property | Δ | – | × | – | ○ | – | – |

"−": Not measured

EP 1 541 613 B1

TABLE 1 (Continued)

| | | Ex. | | | | | |
|---|---|---|---|---|---|---|---|
| | | 3-2 | 3-3 | 3-4 | 3-4a | 3-5 | 3-6 |
| Melt polycondensed resin | Intrinsic viscosity [$\eta_1$] (dl/g) | 0.60 | 0.60 | 0.60 | 0.60 | 0.60 | 0.60 |
| Solid phase polycondensed resin | Intrinsic viscosity [$\eta_2$] (dl/g) | 0.83 | 0.83 | 0.83 | 0.83 | 0.75 | 0.83 |
| | Polycondensation velocity (V) (dl/g/hr) | 0.019 | 0.021 | 0.022 | 0.022 | 0.022 | 0.021 |
| | Content of titanium atoms (T) (mol/t) | 0.084 | 0.084 | 0.084 | 0.084 | 0.084 | 0.084 |
| | Content of magnesium atoms (M) (mol/t) | 0.082 | 0.123 | 0.165 | 0.165 | 0.165 | 0.206 |
| | Content of phosphorus atoms (P) (mol/t) | 0.065 | 0.097 | 0.129 | 0.129 | 0.129 | 0.161 |
| | M/P (mol/mol) | 1.274 | 1.274 | 1.274 | 1.274 | 1.274 | 1.274 |
| | M/T (mol/mol) | 0.985 | 1.477 | 1.970 | 1.970 | 1.970 | 2.462 |
| | P/M/T (mol/mol/mol) | 9.4 | 9.4 | 9.4 | 9.4 | 9.4 | 9.4 |
| | Diethylene glycol content (mol%) | 2.1 | 1.9 | 1.8 | - | 1.8 | 2.0 |
| | Color coordinate b | +3.5 | +3.3 | +3.2 | - | +2.2 | +3.1 |
| | Psychometric lightness L | 89 | 89 | 89 | - | 89 | 89 |
| | Acetaldehyde content (ppm) | 1.7 | 1.4 | 1.2 | - | 1.5 | 1.4 |
| | Toning agent addition amount Blue (ppm) | | | | 1.25 | | |
| | Red (ppm) | | | | 1.25 | | |
| | Color coordinate b | - | - | - | -0.1 | - | - |
| | Psychometric lightness L | - | - | - | 82.5 | - | - |
| Molded plate | Haze (%) | - | - | 1.8 | - | - | - |
| | Acetaldehyde content (ppm) | 21 | 20 | 20 | - | 19 | 20 |
| Bottle | Aroma-retention property | - | - | ○ | - | - | - |

"-": Not measured

EP 1 541 613 B1

TABLE 1 (Continued)

| | | Ex. | | | | | | |
|---|---|---|---|---|---|---|---|---|
| | | 3-7 | 3-8 | 3-9 | 3-10 | 3-11 | 3-12 | 3-13 |
| Melt polycondensed resin | Intrinsic viscosity $[\eta_1]$ (dl/g) | 0.60 | 0.60 | 0.60 | 0.60 | 0.60 | 0.60 | 0.60 |
| Solid phase polycondensed resin | Intrinsic viscosity $[\eta_2]$ (dl/g) | 0.83 | 0.83 | 0.83 | 0.83 | 0.83 | 0.83 | 0.83 |
| | Polycondensation velocity (V) (dl/g/hr) | 0.019 | 0.016 | 0.019 | 0.021 | 0.021 | 0.019 | 0.019 |
| | Content of titanium atoms (T) (mol/t) | 0.084 | 0.084 | 0.084 | 0.084 | 0.084 | 0.084 | 0.084 |
| | Content of magnesium atoms (M) (mol/t) | 0.247 | 0.329 | 0.165 | 0.165 | 0.165 | 0.165 | 0.082 |
| | Content of phosphorus atoms (P) (mol/t) | 0.194 | 0.258 | 0.065 | 0.097 | 0.161 | 0.194 | 0.129 |
| | M/P (mol/mol) | 1.274 | 1.274 | 2.549 | 1.699 | 1.020 | 0.850 | 0.637 |
| | M/T (mol/mol) | 2.955 | 3.940 | 1.970 | 1.970 | 1.970 | 1.970 | 0.985 |
| | P/M/T (mol/mol/mol) | 9.4 | 9.4 | 4.7 | 7.0 | 11.7 | 14.1 | 18.8 |
| | Diethylene glycol content (mol%) | 2.4 | 2.6 | 1.9 | 1.8 | 2.0 | 2.4 | 1.8 |
| | Color coordinate b | +3.0 | +2.8 | +3.7 | +3.4 | +3.0 | +2.9 | +3.1 |
| | Psychometric lightness L | 89 | 89 | 89 | 89 | 89 | 89 | 89 |
| | Acetaldehyde content (ppm) | 1.6 | 1.9 | 2.0 | 1.6 | 1.5 | 1.7 | 1.5 |
| | Toning agent addition amount Blue (ppm) | | | | | | | |
| | Red (ppm) | | | | | | | |
| | Color coordinate b | – | – | – | – | – | – | – |
| | Psychometric lightness L | – | – | – | – | – | – | – |
| Molded plate | Haze (%) | – | – | – | – | – | – | – |
| | Acetaldehyde content (ppm) | 20 | 21 | 21 | 20 | 20 | 21 | 23 |
| Bottle | Aroma-retention property | – | – | – | – | – | – | – |

"–": Not measured

EP 1 541 613 B1

TABLE 1 (Continued)

| | | Ex. | | | Comp. Ex. | | |
|---|---|---|---|---|---|---|---|
| | | 3-14 | 3-15 | 3-16 | 2-1 | 2-2 | 2-3 |
| Melt polycondensed resin | Intrinsic viscosity [$\eta_1$] (dl/g) | 0.60 | 0.60 | 0.60 | 0.60 | 0.60 | 0.60 |
| Solid phase polycondensed resin | Intrinsic viscosity [$\eta_2$] (dl/g) | 0.83 | 0.83 | 0.83 | 0.83 | 0.83 | 0.83 |
| | Polycondensation velocity (V) (dl/g/hr) | 0.021 | 0.021 | 0.019 | 0.012 | 0.012 | 0.013 |
| | Content of titanium atoms (T) (mol/t) | 0.084 | 0.084 | 0.084 | 0.084 | 0.084 | 0.084 |
| | Content of magnesium atoms (M) (mol/t) | 0.123 | 0.206 | 0.247 | 0 | 0.411 | 0.165 |
| | Content of phosphorus atoms (P) (mol/t) | 0.129 | 0.129 | 0.129 | 0 | 0.323 | 0.032 |
| | M/P (mol/mol) | 0.956 | 1.593 | 1.912 | – | 1.274 | 5.098 |
| | M/T (mol/mol) | 1.477 | 2.462 | 2.955 | 0 | 4.925 | 1.970 |
| | P/M/T (mol/mol/mol) | 12.5 | 7.5 | 6.3 | – | 9.4 | 2.3 |
| | Diethylene glycol content (mol%) | 1.8 | 1.8 | 1.8 | 2.7 | 2.9 | 2.1 |
| | Color coordinate b | +3.1 | +3.6 | +4.1 | +4.2 | +2.7 | +4.1 |
| | Psychometric lightness L | 89 | 89 | 89 | 89 | 89 | 89 |
| | Acetaldehyde content (ppm) | 1.3 | 1.4 | 1.6 | 2.3 | 2.2 | 2.4 |
| | Toning agent addition amount Blue (ppm) Red (ppm) | | | | | | |
| | Color coordinate b | – | – | – | – | – | – |
| | Psychometric lightness L | – | – | – | – | – | – |
| Molded plate | Haze (%) | – | – | – | – | – | – |
| | Acetaldehyde content (ppm) | 21 | 20 | 21 | 26 | 25 | 26 |
| Bottle | Aroma-retention property | – | – | – | – | – | – |

"-": Not measured

EP 1 541 613 B1

TABLE 1 (Continued)

| | | Comp. Ex. | | | Ex. | | | |
|---|---|---|---|---|---|---|---|---|
| | | 2-4 | 2-5 | 2-6 | 4-1 | 4-2 | 4-2a | 4-3 |
| Melt polycondensed resin | Intrinsic viscosity [$\eta_1$] (dl/g) | 0.60 | 0.60 | 0.60 | 0.60 | 0.60 | 0.60 | 0.60 |
| Solid phase polycondensed resin | Intrinsic viscosity [$\eta_2$] (dl/g) | 0.83 | 0.83 | 0.83 | 0.83 | 0.83 | 0.83 | 0.83 |
| | Polycondensation velocity (V) (dl/g/hr) | 0.013 | 0.013 | 0.013 | 0.015 | 0.020 | 0.020 | 0.017 |
| | Content of titanium atoms (T) (mol/t) | 0.084 | 0.084 | 0.084 | 0.073 | 0.073 | 0.073 | 0.073 |
| | Content of magnesium atoms (M) (mol/t) | 0.165 | 0.041 | 0.411 | 0.082 | 0.144 | 0.144 | 0.247 |
| | Content of phosphorus atoms (P) (mol/t) | 0.323 | 0.129 | 0.129 | 0.065 | 0.113 | 0.113 | 0.194 |
| | M/P (mol/mol) | 0.510 | 0.319 | 3.186 | 1.274 | 1.274 | 1.274 | 1.274 |
| | M/T (mol/mol) | 1.970 | 0.492 | 4.925 | 1.126 | 1.970 | 1.970 | 3.377 |
| | P/M/T (mol/mol/mol) | 23.5 | 37.6 | 3.8 | 10.7 | 10.7 | 10.7 | 10.7 |
| | Diethylene glycol content (mol%) | 2.8 | 1.8 | 1.8 | 1.7 | 1.7 | - | 1.8 |
| | Color coordinate b | +2.8 | +3.0 | +4.7 | +3.2 | +2.9 | - | +2.6 |
| | Psychometric lightness L | 89 | 89 | 89 | 88 | 88 | - | 88 |
| | Acetaldehyde content (ppm) | 1.9 | 1.7 | 1.8 | 1.8 | 1.4 | - | 2.0 |
| | Toning agent addition amount Blue (ppm) | | | | | | 1.00 | |
| | Red (ppm) | | | | | | 1.00 | |
| | Color coordinate b | - | - | - | - | - | +0.1 | - |
| | Psychometric lightness L | - | - | - | - | - | 84 | - |
| Molded plate | Haze (%) | - | - | - | - | 1.4 | - | - |
| | Acetaldehyde content (ppm) | 26 | 26 | 26 | 18 | 18 | - | 18 |
| Bottle | Aroma-retention property | - | - | - | - | ○ | - | - |

"-": Not measured

TABLE 1 (Continued)

| | | Ex. | | | | | |
| --- | --- | --- | --- | --- | --- | --- | --- |
| | | 4-4 | 4-5 | 4-6 | 4-7 | 5-1 | 5-1a |
| Melt polycondensed resin | Intrinsic viscosity $[\eta_1]$ (dl/g) | 0.60 | 0.60 | 0.60 | 0.60 | 0.60 | 0.60 |
| Solid phase polycondensed resin | Intrinsic viscosity $[\eta_2]$ (dl/g) | 0.83 | 0.83 | 0.83 | 0.83 | 0.75 | 0.75 |
| | Polycondensation velocity (V) (dl/g/hr) | 0.018 | 0.018 | 0.018 | 0.018 | 0.018 | 0.018 |
| | Content of titanium atoms (T) (mol/t) | 0.073 | 0.073 | 0.073 | 0.073 | 0.063 | 0.063 |
| | Content of magnesium atoms (M) (mol/t) | 0.144 | 0.144 | 0.082 | 0.247 | 0.123 | 0.123 |
| | Content of phosphorus atoms (P) (mol/t) | 0.065 | 0.194 | 0.113 | 0.113 | 0.097 | 0.097 |
| | M/P (mol/mol) | 2.230 | 0.743 | 0.728 | 2.185 | 1.274 | 1.274 |
| | M/T (mol/mol) | 1.970 | 1.970 | 1.126 | 3.377 | 1.970 | 1.970 |
| | P/M/T (mol/mol/mol) | 6.1 | 18.4 | 18.8 | 6.3 | 12.5 | 12.5 |
| | Diethylene glycol content (mol%) | 1.7 | 1.9 | 1.7 | 1.7 | 1.6 | – |
| | Color coordinate b | +3.5 | +2.6 | +2.8 | +3.5 | +2.6 | – |
| | Psychometric lightness L | 88 | 88 | 88 | 88 | 88 | – |
| | Acetaldehyde content (ppm) | 1.6 | 2.4 | 1.6 | 1.7 | 1.6 | – |
| | Toning agent addition amount Blue (ppm) | | | | | | 1.00 |
| | Red (ppm) | | | | | | 1.00 |
| | Color coordinate b | – | – | – | – | – | -0.2 |
| | Psychometric lightness L | – | – | – | – | – | 84 |
| Molded plate | Haze (%) | – | – | – | – | 1.1 | – |
| | Acetaldehyde content (ppm) | 18 | 20 | 20 | 20 | 15 | – |
| Bottle | Aroma-retention property | – | – | – | – | ◯ | – |

"–": Not measured

TABLE 1 (Continued)

| | | Ex. | | | | | | |
|---|---|---|---|---|---|---|---|---|
| | | 5-2 | 5-3 | 5-4 | 6 | 6a | 6b | 6c |
| Melt polycondensed resin | Intrinsic viscosity $[\eta_1]$ (dl/g) | 0.60 | 0.60 | 0.60 | 0.60 | 0.60 | 0.60 | 0.60 |
| Solid phase polycondensed resin | Intrinsic viscosity $[\eta_2]$ (dl/g) | 0.675 | 0.675 | 0.675 | 0.675 | 0.675 | 0.675 | 0.675 |
| | Polycondensation velocity (V) (dl/g/hr) | 0.015 | 0.017 | 0.015 | 0.015 | 0.015 | 0.015 | 0.015 |
| | Content of titanium atoms (T) (mol/t) | 0.063 | 0.063 | 0.063 | 0.052 | 0.052 | 0.052 | 0.052 |
| | Content of magnesium atoms (M) (mol/t) | 0.247 | 0.123 | 0.123 | 0.103 | 0.103 | 0.103 | 0.103 |
| | Content of phosphorus atoms (P) (mol/t) | 0.194 | 0.065 | 0.194 | 0.081 | 0.081 | 0.081 | 0.081 |
| | M/P (mol/mol) | 1.274 | 1.912 | 0.637 | 1.274 | 1.274 | 1.274 | 1.274 |
| | M/T (mol/mol) | 3.940 | 1.970 | 1.970 | 1.970 | 1.970 | 1.970 | 1.970 |
| | P/M/T (mol/mol/mol) | 12.5 | 8.3 | 25.0 | 15.0 | 15.0 | 15.0 | 15.0 |
| | Diethylene glycol content (mol%) | 2.2 | 1.7 | 2.2 | 1.6 | − | − | − |
| | Color coordinate b | +2.2 | +2.8 | +2.4 | +2.2 | − | − | − |
| | Psychometric lightness L | 88 | 88 | 88 | 88 | − | − | − |
| | Acetaldehyde content (ppm) | 2.6 | 2.0 | 3.6 | 1.8 | − | − | − |
| | Toning agent addition amount Blue (ppm) | | | | | 0.75 | 0.50 | 0.25 |
| | Red (ppm) | | | | | 0.75 | 0.50 | 0.25 |
| | Color coordinate b | − | − | − | − | −0.1 | +0.4 | +0.9 |
| | Psychometric lightness L | − | − | − | − | 86 | 87 | 89 |
| Molded plate | Haze (%) | − | − | − | 1.0 | − | − | − |
| | Acetaldehyde content (ppm) | 16 | 16 | 18 | 14 | − | − | − |
| Bottle | Aroma-retention property | − | − | − | ○ | − | − | − |

"−": Not measured

EP 1 541 613 B1

TABLE 1 (Continued)

| | | Comp. Ex. | | | | | |
|---|---|---|---|---|---|---|---|
| | | 3 | 4 | 5 | 6 | 6a | 7 |
| Melt polycondensed resin | Intrinsic viscosity [$\eta_1$] (dl/g) | 0.60 | 0.60 | 0.60 | 0.60 | 0.60 | 0.60 |
| Solid phase polycondensed resin | Intrinsic viscosity [$\eta_2$] (dl/g) | 0.75 | 0.75 | 0.75 | 0.83 | 0.83 | 0.73 |
| | Polycondensation velocity (V) (dl/g/hr) | 0.009 | 0.011 | 0.011 | 0.012 | 0.012 | 0.009 |
| | Content of titanium atoms (T) (mol/t) | 0.063 | 0.104 | 0.084 | 0.313 | 0.313 | 0.140 |
| | Content of magnesium atoms (M) (mol/t) | 0.067 | 0.101 | 0.164 | 0.617 | 0.617 | 1.040 |
| | Content of phosphorus atoms (P) (mol/t) | 0.094 | 0.103 | 0.129 | 0.484 | 0.484 | 0 |
| | M/P (mol/mol) | 0.716 | 0.976 | 1.274 | 1.274 | 1.274 | – |
| | M/T (mol/mol) | 1.069 | 0.966 | 1.970 | 1.970 | 1.970 | – |
| | P/M/T (mol/mol/mol) | 22.3 | 9.8 | 9.4 | 2.5 | 2.5 | – |
| | Diethylene glycol content (mol%) | – | – | – | 3.1 | – | 1.8 |
| | Color coordinate b | – | – | – | +8.3 | – | –3.1 |
| | Psychometric lightness L | – | – | – | 91 | – | 77 |
| | Acetaldehyde content (ppm) | – | – | – | 2.1 | – | – |
| | Toning agent addition amount Blue (ppm) | | | | | 2.00 | |
| | Red (ppm) | | | | | 2.00 | |
| | Color coordinate b | – | – | – | – | +4.3 | – |
| | Psychometric lightness L | – | – | – | – | 78 | – |
| Molded plate | Haze (%) | – | – | – | 25.2 | – | – |
| | Acetaldehyde content (ppm) | – | – | – | 28 | – | 35 |
| Bottle | Aroma-retention property | – | – | – | × | – | – |

"–": Not measured      "M" in Comparative Examples 3 and 5: "Na 0.067"
"M" in Comparative Example 4: "Li 0.101"
"M" in Comparative Example 7: "K 0.520 + Co 0.520"

EXAMPLE 111 (Production of polyester resin)

Using a continuous polymerization apparatus comprising a slurry preparation tank, esterification reaction tanks of two stages connected in series thereto and melt polycondensation tanks of three stages connected in series to the second stage esterification reaction tank, terephthalic acid and ethylene glycol were continuously supplied in a weight ratio of 865:485 to the slurry preparation tank, and a 0.3 wt% ethylene glycol solution of ethyl acid phosphate was continuously added in such an amount that the total amount P as phosphorus atoms per 1 ton of the formed polyester resin would be 0.129 mol/ton resin, and Solvent Blue 104 ("Polysynthrene Blue RBL" manufactured by Clariant K.K.) and Solvent Red 135 ("Sandplast Red G" manufactured by Clariant K.K.) as organic toning agents were continuously added each in an amount of 1.50 ppm per theoretical yield of the polyester resin, followed by stirring and mixing to prepare a slurry. This slurry was continuously transported to the first stage esterification reaction tank set for an average retention time of 4 hours in a nitrogen atmosphere at 260˚C under a relative pressure of 50 kPa (0.5 kg/cm$^2$G) and then to the second stage esterification reaction tank set for an average retention time of 1.5 hours in a nitrogen atmosphere at 260˚C under a relative pressure of 5 kPa (0.05 kg/cm$^2$G) to carry out the esterification reaction.

Further, at that time, via an upper pipe provided at the second stage, a 0.6 wt% ethylene glycol solution of magnesium acetate tetrahydrate was continuously added in such an amount that the total amount M as magnesium atoms per 1 ton of the formed polyester resin would be 0.165 mol/ton resin.

Continuously, at the time of continuously transporting the esterification reaction product obtained as described above to the melt polycondensation tank, tert-n-butyl titanate in the form of an ethylene glycol solution having a concentration of titanium atoms of 0.15 wt% and a water concentration of 0.5 wt% was continuously added to the esterification reaction product in the transport pipe in such an amount that the total amount T as titanium atoms per 1 ton of the formed polyester resin would be 0.084 mol/ton resin, and the esterification reaction product was continuously transported to the first stage melt polycondensation tank set at 270˚C under an absolute pressure of 2.6 kPa (20 Torr), then to the second stage melt polycondensation tank set at 278˚C under an absolute pressure of 0.5 kPa (4 Torr) and then to the third stage melt polycondensation tank set at 280˚C under an absolute pressure of 0.3 kPa (2 Torr), to carry out the melt polycondensation by adjusting the retention times in the respective polycondensation tanks so that the intrinsic viscosity (η) of the obtained polyester resin would be 0.60 dl/g, whereupon the product was continuously withdrawn in the form of a strand from a discharge outlet provided at the bottom of the polycondensation tank, cooled with water and then cut by a cutter to produce a polyester resin in the form of chips.

Then, the polyester resin chips obtained as described above were continuously supplied for crystallization to an agitation crystallizer held at about 160˚C in a nitrogen atmosphere so that the retention time would be about 60 minutes and then continuously supplied to a tower type solid phase polycondensation apparatus and subjected to solid phase polycondensation at 210˚C in a nitrogen atmosphere by adjusting the retention time so that the intrinsic viscosity of the obtained polyester resin would be 0.75 dl/g. The intrinsic viscosity and the density of the solid phase polycondensed resin were measured by the following methods.

200 g of the obtained polyester resin was put in an aluminum dish with a size of about 150 mm $\times$ 100 mm with a depth of about 30 mm so that the height would be uniform, dried in the air in a drying oven (Fine Oven DH62, manufactured by Yamato Scientific Co., Ltd.) at 180˚C for 4 hours, and the value b was measured before and after the drying.

The intrinsic viscosity and the value b were measured in accordance with the above-described methods.

The results are shown in Table 2.

(Density)

With respect to the obtained polyester resin, measurement was carried out at 23˚C by using a density gradient tube prepared with a water/ethanol aqueous solution of sodium bromide.

COMPARATIVE EXAMPLE 111 (Production of polyester resin)

Using a continuous polymerization apparatus comprising a slurry preparation tank, esterification reaction tanks of two stages connected in series thereto and melt polycondensation tanks of three stages connected in series to the second stage esterification reaction tank, terephthalic acid and ethylene glycol were continuously supplied in a weight ratio of 865:485 to the slurry preparation tank, and a 3 wt% ethylene glycol solution of orthophosphoric acid was continuously added in such an amount that the total amount T as phosphorus atoms per 1 ton of the formed polyester resin would be 0.97 mol/ton resin, followed by stirring and mixing to prepare a slurry. This slurry was continuously transported to the first stage esterification reaction tank set for an average retention time of 4 hours in a nitrogen atmosphere at 260˚C under a relative pressure of 50 kPa (0.5 kg/cm$^2$G) and then to the second stage esterification reaction tank set for an average retention time of 1.5 hours in a nitrogen atmosphere at 260˚C under a relative pressure of 5 kPa (0.05

kg/cm$^2$G) to carry out the esterification reaction.

Further, at that time, via an upper pipe provided at the second stage, a 0.5 wt% ethylene glycol solution of germanium dioxide was continuously added in such an amount that the total amount T as germanium atoms per 1 ton of the formed polyester resin would be 0.55 mol/ton resin.

Continuously, the esterification reaction product obtained as described above was continuously transported to the melt polycondensation tank, and the esterification reaction product was continuously transported to the first stage melt polycondensation tank set at 270˚C under an absolute pressure of 2.6 kPa (20 Torr), then to the second stage melt polycondensation tank set at 278˚C under an absolute pressure of 0.5 kPa (4 Torr) and then to that third stage melt polycondensation tank set at 280˚C under an absolute pressure of 0.3 kPa (2 Torr), to carry out the melt polycondensation by adjusting the retention times in the respective polycondensation tanks so that the intrinsic viscosity of the obtained polyester resin would be 0.60 dl/g, whereupon the product was continuously withdrawn in the form of a strand from a discharge outlet provided at the bottom of the polycondensation tank, cooled with water and then cut by a cutter to produce a polyester resin in the form of chips.

Then, the polyester resin chips obtained as described above were continuously supplied for crystallization to an agitation crystallizer held at about 160˚C in a nitrogen atmosphere so that the retention time would be about 60 minutes and then continuously supplied to a tower type solid phase polycondensation apparatus and subjected to solid phase polycondensation at 210˚C in a nitrogen atmosphere by adjusting the retention time so that the intrinsic viscosity of the obtained polyester resin would be 0.75 dl/g.

The intrinsic viscosity, the density and the value b after drying of the obtained polyester resin were measured in the same methods as in Example 111.

The results are shown in Table 2.

COMPARATIVE EXAMPLE 112

Using a batch polymerization apparatus comprising a slurry tank of one stage, an esterification tank of one stage and a melt polycondensation tank of one stage, a polyester resin was produced in accordance with the following operation.

In the slurry tank, a raw material slurry comprising 43 kg (260 mol) of terephthalic acid and 19 kg (312 mol) of ethylene glycol was prepared. This raw material slurry was sequentially supplied one 4 hours to the esterification tank set at 250˚C under a relative pressure to the atmospheric pressure of $1.2 \times 10^5$ Pa, into which about 60 kg of bishydroxyethyl terephthalate was preliminarily charged. After completion of the supply, the esterification reaction was further conducted for 1 hour, and the obtained esterified product was transported to the melt polymerization tank. Then, via a pipe connected to the melt polymerization tank, tetra-n-butyl titanate and ethyl acid phosphate each in the form of an ethylene glycol solution were sequentially added with an interval of 5 minutes. These catalyst components were used in such amounts that the contents of Ti and P in 1 ton of the obtained resin would be 0.104 and 0.194 mol, respectively.

The melt polymerization reaction was carried out for a period so that the intrinsic viscosity η1 of the obtained resin would be 0.55 by increasing the temperature in the system from 250˚C to 280˚C over a period of 2 hours and 30 minutes, and reducing the pressure from atmospheric pressure to an absolute pressure of $4.0 \times 10^2$ Pa over a period of 60 minutes and maintaining the pressure. The obtained resin was withdrawn in the form of a strand from a discharge outlet provided at the bottom of the reaction tank, cooled with water and then cut into chips, to produce about 50 kg of a melt polymerized polyester resin having an intrinsic viscosity η1 of 0.60 dl/g.

Then, the obtained melt polymerized polyester resin was continuously supplied for crystallization to an agitation crystallizer held at about 160˚C so that the retention time would be about 5 minutes. The crystallized resin was further dried at 160˚C for 2 hours in a nitrogen stream of 40 1/min (oxygen concentration 2 ppm) in an inert oven ("IPHH-201 model", manufactured by ESPEC Corp.), and heated at 210˚C for a period of time until the intrinsic viscosity became 0.75 dl/g, for solid phase polymerization.

The intrinsic viscosity, the density and the value b after drying of the obtained polyester resin were measured in the same methods as in Example 111.

The results are shown in Table 2.

TABLE 2

| | Intrinsic viscosity | Density | Value b before drying | Value b after drying at 180˚C for 4 hours | Decrease in value b |
|---|---|---|---|---|---|
| Ex. 111 | 0.75 | 1.40 | 0.2 | -0.5 | 0.7 |
| Comp. Ex. 111 | 0.75 | 1.40 | -0.4 | 0.0 | -0.4 |
| Comp. Ex. 112 | 0.75 | 1.40 | 6.5 | 7.5 | -1.0 |

EXAMPLE 121 (Production of polyester bottle)

The polyester resin obtained in Example 111 for production of polyester resin, was dried in the air at 180˚C for 4 hours in a drying oven (Fine Oven DH62 manufactured by Yamato Scientific Co., Ltd.), and then, by an injection molding machine (FE80S12ASE manufactured by Nissei Plastic Industrial Co., Ltd.), a preform which is a melt molded product and has a weight of 60 gr was injection-molded at a cylinder temperature of 280˚C under a back pressure of $5 \times 10^5$ Pa at an injection rate of 60 cc/sec at a mold temperature of 20˚C with a molding cycle of about 45 seconds.

The obtained preform was blow-molded by a stretching blow molding machine (manufactured by Mitsubishi Chemical Corporation) for a heating time of 75 seconds into a bottle having a content of 1.5 L.

With respect to the obtained bottle, the color tone was evaluated by the following method, and the results are shown in Table 3.

(Color Tone of Bottle)

A bottle was erected on white paper, and the color tone of the bottle was visually observed from the mouth stopper portion direction of the bottle, and evaluation was made under the following standards.

　　○: The entire bottle and the mouth stopper portion not yellowish.
　　×: The bottle mouth stopper portion yellowish. COMPARATIVE EXAMPLE 121 (Production of polyester bottle)

In the same manner as in Example 121 except that the polyester resin obtained in Comparative Example 111 for production of polyester resin was used, a bottle was molded, the value b of the polyester resin before and after the drying was measured and the color tone of the bottle was evaluated, and the results are shown in Table 3.

COMPARATIVE EXAMPLE 122

In the same manner as in Example 121 except that the polyester resin obtained in Comparative Example 112 for production of polyester resin was used, a bottle was molded, the value b of the polyester resin before and after the drying was measured and the color tone of the bottle was evaluated, and the results are shown in Table 3.

TABLE 3

|  | Polyester resin used for molding | Evaluation of bottle color tone |
|---|---|---|
| Ex. 121 | Ex. 111 for production of polyester resin | ○ |
| Comp. Ex. 121 | Comp. Ex. 111 for production of polyester resin | × |
| Comp. Ex. 122 | Comp. Ex. 112 for production of polyester resin | × |

EXAMPLE 201

The methods for measuring physical properties employed in Examples 200' are as follows. The intrinsic viscosity and the value b were measured in the same manner as mentioned above.

(1) Method of measuring organic toning agent concentration

1 mL of a mixed ethylene glycol dispersion of organic toning agents with color indices of Solvent Blue 104 ("Polysynthrene Blue RBL" manufactured by Clariant K.K., hereinafter referred to simply as S.B. 104) and Solvent Red 135 ("Sandplast Red G" manufactured by Clariant K.K., hereinafter referred to simply as S.R. 135) and 30 ml of chloroform were added to a separating funnel, followed by thorough mixing with shaking so that the organic toning agents were extracted into the chloroform phase. The extracted solution (chloroform phase) was collected, and absorbances at 450 nm and 632 nm were measured by a spectrophotometer, and the organic toning agent concentration were quantitatively analyzed from an analytical formula as described hereinafter.

The absorbance was measured by means of a spectrophotometer ("V-570", manufactured by JASCO Corporation) by putting the above extracted solution to a glass cell (10x10x45 mm). The ethylene glycol dispersion preparation concentrations of S.B. 104 and S.R. 135 were represented by the amounts of addition of the respective organic toning agents based on the total weight of the dispersion. For example, ethylene glycol was added to 0.05 g of S.B. 104 and 0.025 g of S.R. 135 to bring the total amount to 50 g, the dispersion is represented as S.B. 104/S.R. 135 mixed ethylene glycol dispersion 0.1/0.05 wt%.

(2) Preparation of organic toning agent concentration analytical formula

1 mL of a S.B. 104/S.R. 135 mixed ethylene glycol slurry dispersion (preparation concentrations 0.050/0.050 wt%) and 30 ml of chloroform were added to a separating funnel, followed by through mixing by shaking so that the organic toning agents were extracted into the chloroform phase. The extracted solution (chloroform phase) was collected, and absorbances at 450 nm and 632 nm were measured by a spectrophotometer.

Absorbances were measured in the same method except that the S.B. 104/S.R. 135 mixed ethylene glycol dispersion preparation concentrations were 0.075/0.075 wt%, 0.100/0.100 wt% or 0.125/0.125 wt%. Then, an analytical formula was obtained by plotting the organic toning agent concentrations and the absorbances. The results are as follows. Further, the second power ($R^2$) of the multiple correlation coefficient in the formula (I) was 0.987, and $R^2$ in the formula (II) was 0.998, and a strong correlation between the organic toning agent concentration and the absorbance was confirmed in each case.

$$\text{S.B. 104 organic toning agent concentration (wt\%)} =$$

$$0.071 \times (\text{absorbance at 632 nm}) - 0.003 \qquad (I)$$

(The wavelength at 632 nm in the above formula (I) is a wavelength at which absorbance of S.B. 104 is maximum.)

$$\text{S.R. 135 organic toning agent concentration (wt\%)} =$$

$$0.016 \times (\text{absorbance at 450 nm}) - 0.019 \qquad (II)$$

(The wavelength at 450 nm in the above formula (II) is a wavelength at which absorbance of S.R. 135 is maximum in a region in which the absorbance of S.B. 104 is minimum.)

(Quantitative Analysis of Organic Toning Agent Concentration)

A S.B. 104/S.R. 135 mixed ethylene glycol dispersion 0.074/0.102 wt% (dispersion A) was prepared, and 1 mL of the dispersion A and 30 mL of chloroform were added to a separating funnel, followed by thorough mixing by shaking so that the organic toning agents were extracted into the chloroform phase. The extracted solution (chloroform phase) was collected, absorbances at 450 nm and 632 nm were measured by a spectrophotometer, and the concentrations were quantitatively analyzed by the above analytical formula. The results are shown in Table 4.

TABLE 4

|  | First | Second | Third | Standard deviation |
|---|---|---|---|---|
| Absorbance at 632 nm | 1,082 | 1.104 | 1.08 | 0.013 |
| Measured value of S.B. 104 concentration | 0.074 | 0.075 | 0.074 | 0.001 |
| - | First | Second | Third | Standard deviation |
| Absorbance at 450 nm | 0.753 | 0.769 | 0.78 | 0.014 |
| Measured value of S.R. 135 concentration | 0.099 | 0.102 | 0.104 | 0.002 |

Average of S.B. 104 concentration = 0.074 wt%, average of S.R. 135 concentration = 0.102 wt%

(Production of Organic Toning Agent-Containing Polyester)

EXAMPLE 202

Using a continuous polymerization apparatus comprising a slurry preparation tank, esterification reaction tanks of two stages connected in series thereto and melt polycondensation tanks of three stages connected in series to the second stage esterification reaction tank, terephthalic acid and ethylene glycol were continuously supplied in a weight ratio of 865:485 to the slurry preparation tank, and a 0.6 wt% ethylene glycol solution of ethyl acid phosphate was continuously added in such an amount that the total amount P as phosphorus atoms per 1 ton of the formed polyester resin would be 0.129 mol/ton resin, and a S.B. 104/S.R. 135 mixed ethylene glycol dispersion (preparation concentrations 0.10/0.10 wt%) prepared in an organic toning agent dispersion preparation tank was continuously added in such an amount that the total amount of the organic toning agents per 1 ton of the formed polyester resin would be 1.0 g/ton resin.
The organic toning agent dispersion was sampled every four hours at a portion immediately before the addition inlet to the slurry preparation tank, and the organic toning agent concentrations were quantitatively analyzed by the method as disclosed in Example 1. Based on the results, the addition flow amount of the organic toning agent dispersion to the slurry preparation tank was controlled to bring the addition amount to the above-described organic toning agent addition amount. A specific example is shown in Table 5.
The above slurry was continuously transported to the first stage esterification reaction tank set for an average reaction time of 4 hours in a nitrogen atmosphere at 260˚C under a relative pressure of 50 kPa (0.5 kg/cm$^2$G) and then to the second stage esterification reaction tank set for an average retention time of 1.5 hours in a nitrogen atmosphere at 260˚C under a relative pressure of 5 kPa (0.05 kg/cm$^2$G), to carry out the esterification reaction.
Further, at that time, via an upper pipe provided at the second stage, a 1.1 wt% ethylene glycol solution of magnesium acetate tetrahydrate was continuously added in such an amount that the total amount M as magnesium atoms per 1 ton of the formed polyester resin would be 0.165 mol/ton resin.
Continuously, the above obtained esterification reaction product was continuously transported to the melt polycondensation tank. At that time, tetra-n-butyl titanate in the form of an ethylene glycol solution prepared to have a concentration of tetra-n-butyl titanate of 0.5 wt% and a water concentration of 0.5 wt% was continuously added to the esterification reaction product in the transportation pipe in such an amount that the total amount T as titanium atoms per 1 ton of the formed polyester resin would be 0.084 mol/ton resin, and the esterification reaction product was continuously transported to the first stage melt polycondensation tank set at 270˚C under an absolute pressure of 2.6 kPa (20 Torr), then to the second stage melt polycondensation tank set at 278˚C under an absolute pressure of 0.5 kPa (4 Torr) and then to the third stage melt polycondensation tank set at 280˚C under an absolute pressure of 0.3 kPa (2 Torr), to carry out the melt polycondensation by adjusting the retention times in the respective polycondensation tanks so that the intrinsic viscosity of the obtained polyester resin would be 0.66 dl/g, whereupon the product was continuously withdrawn in the form of a strand from a discharge outlet provided at the bottom of the polycondensation tank, cooled with water and then cut by a cutter to produce a polyester resin in the form of chips.
Then, the polyester resin chips obtained as described above were continuously supplied for crystallization to an agitation crystallizer held at about 160˚C in a nitrogen atmosphere so that the retention time would be about 60 minutes and then continuously supplied to a tower type solid phase polycondensation apparatus and subjected to solid phase polycondensation at 210˚C in a nitrogen atmosphere by adjusting the retention time so that the intrinsic viscosity of the obtained polyester resin would be 0.85 dl/g.
The color value b of this resin is shown in Table 6.

TABLE 5

| Hrs | S.B. 104 quantitatively analyzed concentration (wt%) | S.R. 135 quantitatively analyzed concentration (wt%) | Addition flow amount |
|---|---|---|---|
| 0 | 0.100 | 0.100 | 1.00 |
| 4 | 0.100 | 0.100 | 1.00 |
| 12 | 0.095 | 0.095 | 1.00→1.05 |
| 24 | 0.095 | 0.095 | 1.05 |
| Hrs: time from the beginning of toner addition | | | |

With respect to the addition flow amount, a flow amount with which an aimed organic toning agent addition amount is obtained when the S.B. 104/S.R. 135 quantitatively analyzed concentrations are 0.100/0.100 wt% is taken

as 1.00.

The arrow in Table means that the addition flow amount changed from the left-side value to the right-side value after the quantitative analysis of the organic toning agents.

TABLE 6

| Hrs | IV (dL/g) | b |
|-----|-----------|---|
| 0 | 0.85 | 0.4 |
| 8 | 0.85 | 0.4 |
| 16 | 0.85 | 0.4 |
| 24 | 0.85 | 0.3 |
| Standard deviation | | 0.05 |
| With respect to Hrs, time when the steady state is achieved after the beginning of addition of the organic toning agents is taken as 0. | | |

EXAMPLE 251

The methods for measuring physical properties employed in Examples 250's are as follows. The intrinsic viscosity and the color tone were measured by the above methods.

(Esterification Ratio)

$$\text{Esterification ratio (\%) = ((saponification value -}$$

$$\text{acid value) / saponification value)} \times 100$$

The acid value is an acid equivalent of the reaction product obtained by dissolving the esterification reaction product in dimethylformamide, followed by titration with 0.1N potassium hydroxide, and the saponification value is a total equivalent of an acid in the reaction product and an esterified acid, obtained by alkali hydrolysis of the oligomer with potassium hydroxide in water/ethanol, followed by back titration with 0.5N hydrochloric acid.

(Median Diameter of Organic Toning Agent Particles)

The median diameter of the organic toning agent particles was measured by means of a laser scattering particle size distribution analyzer ("LA-920", manufactured by HORIBA Ltd.), employing an ethylene glycol as the blank, setting the refractive index at 1.3, by preparing a dispersion so that the organic toning agent dispersion concentration would be from 90 to 95%.

(Preparation of Organic Toning Agent Dispersion)

Method A

S.B. 104 and S.R. 135 each in an amount of 250 g were added to a 5 L cylindrical polyethylene container, and ethylene glycol was added so that the total amount would be 5.0 kg, followed by dispersion at a number of revolutions of 10,000 rpm for 30 minutes by using a homogenizer ("ULTRA TURRAX T-50" manufactured by IKA). At that time, the ethylene glycol dispersion preparation concentrations of S.B. 104 and S.R. 135 are represented by the amounts of addition of the respective organic toning agents based on the total weight of the dispersion, and the dispersion is represented as a S.B. 104/S.R. 135 mixed ethylene glycol dispersion 5.0/5.0 wt%.

The dispersion was transported to an organic toning agent dispersion preparation tank, and ethylene glycol was added so that the dispersion total weight would be 250 kg, to prepare a S.B. 104/S.R. 135 mixed ethylene glycol dispersion (0.10/0.10 wt%). At that time, the median diameter of the organic toning agent particles in the organic toning agent dispersion was 8.3 $\mu$m.

Method B

In the same manner as in Method A except that dispersing was carried out by stirring by using an anchor blade in the polyethylene container without using the homogenizer, a S.B. 104/S.R. 135 mixed ethylene glycol dispersion (0.10/0.10 wt%) was prepared. At that time, the median diameter of the organic toning agent particles in the organic toning agent dispersion was 17.8 $\mu$m.

(Production of Polyester)

Using a continuous polymerization apparatus comprising a slurry preparation tank, esterification reaction tanks of two stages connected in series thereto and melt polycondensation tanks of three stages connected in series to the second stage esterification reaction tank, terephthalic acid and ethylene glycol were continuously supplied in a weight ratio of 865:485 to the slurry preparation tank, and a 0.6 wt% ethylene glycol solution of ethyl acid phosphate was continuously added in such an amount that the total amount P as phosphorus atoms per 1 ton of the formed polyester resin would be 0.129 mol/ton resin, and the obtained slurry was continuously transported to the first stage esterification reaction tank set for an average retention time of 4 hours in a nitrogen atmosphere at 260˚C under a relative pressure of 50 kPa (0.5 kg/cm$^2$G) and then to the second stage esterification reaction tank set for an average retention time of 1.5 hours in a nitrogen atmosphere at 260˚C under a relative pressure of 5 kPa (0.05 kg/cm$^2$G), to carry out the esterification reaction. At that time, the esterification ratio as measured by the above method, was 85% in the first stage and 95% in the second stage.

Further, at that time, via an upper pipe provided at the second stage, a 1.1 wt% ethylene glycol solution of magnesium acetate tetrahydrate was continuously added in such an amount that the total amount M as magnesium atoms per 1 ton of the formed polyester resin would be 0.165 mol/ton resin. Further, a RBL/RedG mixed ethylene glycol dispersion (preparation concentrations 0.10/0.10 wt%) prepared in Method A was circulated at a linear velocity of 2.1 m/sec, branched from the circulation pipe and continuously added so that the total amount of the respective organic toning agents per 1 ton of the obtained polyester resin would be 1.0 g/ton resin.

Continuously, at the time of transporting the esterification reaction product obtained as described above to the melt polycondensation tank, tetra-n-butyl titanate in the form of an ethylene glycol solution prepared to have a concentration of tetra-n-butyl titanate of 0.5 wt% and a water concentration of 0.5 wt%, was continuously added to the esterification reaction product in the transportation pipe in such an amount that the total amount T as titanium atoms per 1 ton of the formed polyester resin would be 0.084 mol/ton resin, and the esterification reaction product was continuously transported to the first stage melt polycondensation tank set at 270˚C under an absolute pressure of 2.6 kPa (20 Torr), then to the second stage melt polycondensation tank set at 278˚C under an absolute pressure of 0.5 kPa (4 Torr) and then to the third stage melt polycondensation tank set at 280˚C under an absolute pressure of 0.3 kPa (2 Torr), to carry out the melt polycondensation by adjusting the retention times in the respective polycondensation tanks so that the intrinsic viscosity ($[\eta_1]$) of the obtained polyester resin would be 0.66 dl/g, whereupon the product was continuously withdrawn in the form of a strand from a discharge outlet provided at the bottom of the polycondensation tank, cooled with water and then cut by a cutter to obtain a polyester resin in the form of chips. Then, the polyester resin chips obtained as described above were continuously supplied for crystallization to an agitation crystallizer held at about 160˚C in a nitrogen atmosphere so that the retention time would be about 60 minutes and then continuously supplied to a tower type solid phase polycondensation apparatus and subjected to solid phase polycondensation in a nitrogen atmosphere at 210˚C by adjusting the retention time so that the intrinsic viscosity ($[\eta_2]$) of the obtained polyester resin would be 0.85 dl/g.

The change with time of the color tone at that time is shown in Table 7.

TABLE 7

| Hrs | L | a | b |
|---|---|---|---|
| 0 | 83.5 | -0.1 | 0.3 |
| 8 | 83.1 | 0.0 | 0.3 |
| 16 | 83.4 | -0.2 | 0.4 |
| 24 | 83.0 | -0.1 | 0.3 |

(continued)

| Hrs | L | a | b |
|---|---|---|---|
| Average | 83.3 | -0.1 | 0.3 |
| Standard deviation | 0.24 | 0.08 | 0.05 |
| With respect to Hrs, time when the steady state is achieved after the beginning of addition of the organic toning agents is taken as 0. Color tone judgment: ◎ | | | |

To judge the color tone, evaluation was carried out from the color tone average and the stability with time of the color tone.

◎: Excellent, ○: Favorable, ×: Poor

EXAMPLE 252

In the same manner as in Example 251 except that the organic toning agents were added to the slurry preparation tank (esterification ratio 0%), a polyester resin was produced.
The change with time of the color tone at that time is shown in Table 8.

TABLE 8

| Hrs | L | a | b |
|---|---|---|---|
| 0 | 82.9 | -0.8 | 0.3 |
| 8 | 82.5 | -0.8 | 0.2 |
| 16 | 82.3 | -0.9 | 0.3 |
| 24 | 82.8 | -0.7 | 0.2 |
| Average | 82.6 | -0.8 | 0.3 |
| Standard deviation | 0.28 | 0.08 | 0.06 |
| With respect to Hrs, time when the steady state is achieved after the beginning of addition of the organic toning agents is taken as 0. Color tone judgment: ○ | | | |

EXAMPLE 253

In the same manner as in Example 251 except that the organic toning agent dispersion was prepared in accordance with Method B, a polyester resin was produced.
The change with time of the color tone at that time is shown in Table 9.

TABLE 9

| Hrs | L | a | b |
|---|---|---|---|
| 0 | 83.4 8 83.0 | -0.1 0.0 | 0.3 0.4 |
| 16 | 83.3 | -0.2 | 0.5 |
| 24 | 83.8 | -0.3 | 0.3 |
| Average | 83.4 | -0.2 | 0.4 |

(continued)

| Hrs | L | a | b |
|---|---|---|---|
| Standard deviation | 0.33 | 0.13 | 0.10 |

| With respect to Hrs, time when the steady state is achieved after the beginning of addition of the organic toning agents is taken as 0.<br>Color tone judgment: ○ | | | |

EXAMPLE 301

Using a continuous polymerization apparatus comprising a slurry preparation tank, esterification reaction tanks of two stages connected in series thereto and melt polycondensation tanks of three stages connected in series to the second stage esterification reaction tank, terephthalic acid and ethylene glycol were continuously supplied in a weight ratio of 865:485 to the slurry preparation tank, and a 0.23 wt% ethylene glycol solution (P atom concentration 0.05 wt%) of ethyl acid phosphate, was continuously added in such an amount that the content (P) as phosphorus atoms per 1 ton of the formed polyester resin would be 0.113 mol, followed by stirring and mixing to prepare a slurry. This slurry was transported to the first stage esterification reaction tank set for an average retention time of 4 hours in a nitrogen atmosphere at 260°C under a relative pressure of 50 kPa (0.5 kg/cm$^2$G) and then to the second stage esterification reaction tank set for an average retention time of 1.5 hours in a nitrogen atmosphere at 260°C under a relative pressure of 5 kPa (0.05 kg/cm$^2$G), to carry out the esterification reaction. At that time, the average esterification ratio as measured by the following method, was 85% in the first stage and 95% in the second stage.

(Average Esterification Ratio)

With respect to a solution having a sample dissolved at a concentration of 3 wt% in a mixed solvent of deuterated chloroform/hexafluoroisopropanol (weight ratio: 7/3), $^1$H-NMR was measured by a nuclear magnetic resonance apparatus ("JNM-EX270 model", manufactured by JEOL Ltd.), and each peak was identified. The amount of terminal carboxyl groups (A mol/ton sample) was calculated from the integral value of the peak, and by the following formula, the esterification ratio (E%) was calculated as a proportion of the esterified among all carboxyl groups of terephthalic acid units.

$$\texttt{Esterification ratio (E) = [1-A/\{(1,000,000/192.2) \times 2\}] \times 100}$$

Further, at that time, via an upper pipe provided at the second stage, a 0.6 wt% ethylene glycol solution of magnesium acetate tetrahydrate (Mg atom concentration: 0.068 wt%, containing 0.6 wt% of water) was continuously added in such an amount that the content (M) as magnesium atoms per 1 ton of the formed polyester resin would be 0.144 mol.

Continuously, at the time of transporting the esterification reaction product obtained as described above to the melt polycondensation tank, tetra-n-butyl titanate in the form of an ethylene glycol solution having a concentration of 1.0 wt% (Ti atom concentration: 0.14 wt%) and a water concentration of 0.5 wt%, was continuously added to the esterification reaction product in the transportation pipe in such an amount that the content (T) as titanium atoms per 1 ton of the formed polyester resin would be 0.073 mol, and the esterification reaction product was continuously transported to the first stage melt polycondensation tank set at 270°C under an absolute pressure of 2.6 kPa (20 Torr), then to the second stage melt polycondensation tank set at 278°C under an absolute pressure of 0.5 kPa (4 Torr) and then to the third stage melt polycondensation tank set at 280°C under an absolute pressure of 0.3 kPa (2 Torr), to carry out the melt polycondensation by adjusting the retention times in the respective polycondensation tanks so that the intrinsic viscosity ($[\eta_1]$) of the obtained polyester resin would be 0.60 dl/g, whereupon the product was continuously withdrawn in the form of a strand from a discharge outlet provided at the bottom of the polycondensation tank, cooled with water and then cut by a cutter to obtain a polyester resin in the form of chips.

Then, the polyester resin chips obtained as described above were continuously supplied for crystallization to an agitation crystallizer held at about 160°C in a nitrogen atmosphere so that the retention time would be about 60 minutes and then continuously supplied to a tower type solid phase polycondensation apparatus and subjected to solid phase polycondensation in a nitrogen atmosphere at 210°C by adjusting the retention time so that the intrinsic viscosity

($[\eta_2]$) of the obtained polyester resin would be 0.75 dl/g. The intrinsic viscosity ($[\eta_1]$) of the above melt polycondensed resin and the intrinsic viscosity ($[\eta_2]$) of the solid phase polycondensed resin, were measured by the above-mentioned method.

Further, with respect to the obtained solid phase polycondensed resin chips, the content (T) as titanium atoms of the titanium component, the content (P) as phosphorus atoms of the phosphorus component and the content (M) as magnesium atoms of the magnesium component, per 1 ton of the resin, were measured by the above-described methods. Further, the diethylene glycol copolymerization amount, the acetaldehyde content, and the color coordinate value b and the psychometric lightness value L as the color tone were measured by the above-described methods. The results are shown in Table 10.

Then, the obtained resin was dried at 160˚C for 4 hours in a nitrogen stream of 40 1/min in an inert oven ("IPHH-201 model", manufactured by ESPEC COMPANY), and then, by an injection molding machine ("M-70AII-DM", manufactured by Meiki Co., Ltd.), a stepped molded plate having the shape as shown in Fig. 1 and having a size of 50 mm $\times$ 100 mm and thicknesses of six stages ranging from 6 mm to 3.5 mm in a transverse direction with each step being 0.5 mm, was injection-molded at a cylinder temperature of 280˚C under a back pressure of $5 \times 10^5$ Pa at an injection rate of 40 cc/sec under a dwell pressure of $35 \times 10^5$ Pa at a mold temperature of 25˚C with a molding cycle of about 75 seconds. In Fig. 1, G indicates a gate portion.

With respect to the obtained molded plate, the temperature-rising crystallization temperature and the temperature-lowering crystallizing temperature were measured by the following method, and the results are shown in Table 10.

(Temperature-rising Crystallization Temperature/ Temperature-lowering Crystallization Temperature)

The forward end portion (portion A in Fig. 1) having a thickness of 3.5 mm in the molded plate, was cut out and dried at 40˚C for 3 days by a vacuum dryer, whereupon a sample cut out from the non-surface portion was used, and about 10 mg thereof was accurately weighed and sealed in by means of an aluminum oven pan and a pan cover (normal pressure type, "P/N SSC000E030" and "P/N SSC000E032", manufactured by Seiko Denshi K.K.). By means of a differential scanning calorimeter ("DSC220C", manufactured by Seiko K.K.), the sample was heated from 20˚C to 285˚C at a rate of 20˚C/min in a nitrogen stream, and the crystallization heat generation peak temperature observed during the temperature rise, was measured as the temperature-rising crystallization temperature. Then, the sample was maintained in a molten state at 285˚C for 5 minutes and then cooled to 20˚C at a rate of 10˚C/min, and the crystallization heat generation peak temperature observed during the temperature drop was measured as the temperature-lowering crystallization temperature.

Separately, to the obtained polyester resin chips, a low density polyethylene resin ("UE320" manufactured by Japan Polychem Corporation) in an amount of about 0.040 ppm, a stepped molded plate was molded from the low density polyethylene resin-added polyester resin in the same manner as mentioned above. With respect to the obtained stepped molded plate, the temperature-rising crystallization temperature was measured, whereupon it was 162˚C. The low density polyethylene resin-added polyester resin was dried at 130˚C for 10 hours in a vacuum dryer, and then, by an injection molding machine ("FE-80S" manufactured by NISSEI PLASTIC INDUSTRIAL CO., LTD.), a substantially amorphous preform of a test tube shape having an outer diameter of about 29 mm, a height of about 165 mm, an average wall thickness of about 3.7 mm, a mouth stopper portion height of (a) 22.07 mm or (b) 23.65 mm and a weight of about 60 g, was injection-molded at a cylinder temperature of 280˚C, under a back pressure of $5\times10^5$ Pa at an injection rate of 45 cc/sec under a dwell pressure of $30\times10^5$ Pa at a mold temperature of 20˚C with a molding cycle of about 40 seconds. The mouth stopper portion of the obtained preform was heated for 98 seconds by a quartz heater type mouth stopper portion crystallizer, and then a mold pin was inserted to carry out crystallization treatment of the mouth stopper portion.

Then, each preform subjected to the crystallization treatment was mounted in a blow mold set at 160˚C and blow-molded under a blow pressure of $7\times10^5$ Pa for 1 second and further under $30\times10^5$ Pa for 40 seconds while stretching in the height direction by a stretching rod, heat-set and cooled in air to mold a bottle having an outer diameter of about 95 mm, a height of about 305 mm, an average wall thickness of the body portion of about 0.35 mm, a weight of about 60 g and an internal capacity of about 1.5 liter.

With respect to each of the obtained bottles, the mouth stopper portion height and the degree of crystallization at the top of the mouth stopper portion were measured by the following methods, and the results are shown in Table 10.

(Height at the Plug Portion)

The vertical distance from the top of the mouth stopper portion to the bottom of the support ring was measured and taken as the mouth stopper portion height.

**EP 1 541 613 B1**

(Degree of Crystallization at the Top of the Plug Portion)

About 20 mg was cut out from the top of the mouth stopper portion, the density (d) was measured by a wet densimeter, and the degree of crystallization was calculated from the density (d) in accordance with the following formula.

$$\text{Degree of crystallization } (\%) = [\{1.455 \times (d - 1.335)\} / \{d \times (1.455 - 1.335)\}] \times 100$$

EXAMPLES 302 to 305

In the same manner as in Example 301 except that the titanium atom concentration and the water concentration of the ethylene glycol solution of tetra-n-butyl titanate and the phosphorus atom concentration of the ethylene glycol solution of ethyl acid phosphate were changed to the values as shown in Table 10, polyester resins were produced, various measurements were carried out, and the results are shown in Table 10. In these Examples also, molding of a bottle was carried out by using a low density polyethylene resin-added polyester resin of which the temperature-rising crystallization temperature was set at 162°C by adjusting the addition amount of the low density polyethylene resin.

| TABLE 10 | | Ex. 301 | Ex. 302 | Ex. 303 | Ex. 304 | Ex. 305 |
|---|---|---|---|---|---|---|
| Polycondensation | Titanium compound ethylene glycol solution | | | | | |
| | Titanium atom concentration (wt%) | 0.14 | 0.14 | 0.14 | 0.25 | 0.14 |
| | Water concentration (wt%) | 0.5 | 0.2 | 0.8 | 0.5 | 0.5 |
| | Phosphorus compound ethylene glycol solution | | | | | |
| | Phosphorus atom concentration (wt%) | 0.05 | 0.05 | 0.05 | 0.05 | 0.8 |
| | Germanium compound ethylene glycol solution | | | | | |
| | Germanium atom concentration (wt%) | | | | | |
| Melt polycondensed resin | Intrinsic viscosity $[\eta_1]$ (dl/g) | 0.60 | 0.60 | 0.60 | 0.60 | 0.60 |
| Solid phase polycondensed resin | Intrinsic viscosity $[\eta_2]$ (dl/g) | 0.75 | 0.75 | 0.75 | 0.75 | 0.75 |
| | Titanium atom content (T) (mol/t) | 0.073 | 0.073 | 0.073 | 0.073 | 0.073 |
| | Phosphorus atom content (P) (mol/t) | 0.113 | 0.113 | 0.113 | 0.113 | 0.113 |
| | Magnetism atom content (M) (mol/t) | 0.144 | 0.144 | 0.144 | 0.144 | 0.144 |
| | Germanium atom content (G) (mol/t) | | | | | |
| | Diethylene glycol content (mol%) | 1.7 | - | - | - | - |
| | Aldehyde content (ppm) | 1.4 | - | - | - | - |
| | Color coordinate b | +2.9 | - | - | - | - |
| | Psychometric lightness L | 88 | - | - | - | - |

(continued)

| TABLE 10 | | Ex. 301 | Ex. 302 | Ex. 303 | Ex. 304 | Ex. 305 |
|---|---|---|---|---|---|---|
| Molded plate temperature | Temperature-rising crystallization temperature (°C) | 176 | 172 | 173 | 172 | 179 |
| | Temperature-lowering crystallization (°C) | 163 | 173 | 174 | 172 | 162 |
| Bottle | (a) Plug portion height (mm) | 21.02 | 20.92 | 21.14 | 21.12 | 20.97 |
| | (b) Degree of crystallization at the top of mouth stopper portion (%) | 33 | 32 | 32 | 32 | 32 |
| | (a) Plug portion height (mm) | 22.44 | 22.33 | 22.57 | 22.55 | 22.37 |
| | (b) Degree of crystallization at the top of mouth stopper portion (%) | 32 | 33 | 33 | 32 | 32 |
| "-": Not measured | | | | | | |

## INDUSTRIAL APPLICABILITY

According to the present invention, a polyester resin which is excellent in the color tone and the transparency, which has a low acetaldehyde content, and further, which is excellent also in the thermal stability and of which the increase in the acetaldehyde content during e.g. the melt molding is reduced, and a process for producing such a polyester resin at a high polycondensation velocity, can be provided.

## Claims

1. A polyester resin obtainable by polycondensing a dicarboxylic acid component containing terephthalic acid as the main component and a diol component containing ethylene glycol as the main component in the presence of (1) a compound of at least one element selected from the group consisting of titanium group elements of Group 4A of the periodic table, (2) a magnesium compound and (3) a phosphorus compound, via an esterification reaction, **characterized in that** the contents as atoms derived from the respective compounds (1), (2) and (3) satisfy the following formulae (I) to (V), where the total amount of titanium group atoms of the compound (1) is T (mol/ton resin), the total amount of magnesium atoms of the compound (2) is M (mol/ton resin) and the total amount of phosphorus atoms of the compound (3) is P (mol/ton resin) :

$$(I) \quad 0.020 \leq T \leq 0.200$$

$$(II) \quad 0.040 \leq M \leq 0.400$$

$$(III) \quad 0.020 \leq P \leq 0.300$$

$$(IV) \quad 0.50 \leq M/P \leq 3.00$$

$$(V) \quad 0.20 \leq M/T \leq 4.00;$$

and wherein the polyester resin has a color coordinate value b of at most 1.0 and a psychometric lightness value L of at least 80, of the Hunter's color difference formula in the Lab color system, and the polyester resin contains an organic toning agent.

2. The polyester resin according to Claim 1, wherein M/P is at least 0.90 and at most 1.80, and M/T is at least 0.50 and at most 3.50.

3. The polyester resin according to Claim 1 or 2, wherein the contents as atoms derived from the respective compounds (1), (2) and (3) further satisfy the following formula (VI):

$$(VI) \quad 3.0 \leq P/M/T \leq 19.0$$

4. The polyester resin according to any one of Claims 1 to 3, wherein the content of ethylene glycol units is at least 97.0 mol% based on the total diol component, the content of diethylene glycol units is at most 3.0 mol% based on the total diol component, and the intrinsic viscosity is from 0.70 to 0.90 dl/g.

5. The polyester resin according to any one of Claims 1 to 4, wherein the content of terephthalic acid units is at least 98.5 mol% based on the total dicarboxylic acid component.

6. The polyester resin according to any one of Claims 1 to 5, which contains an organic toning agent in an amount of at most 3.0 ppm.

7. The polyester resin according to Claim 6, wherein the organic toning agent is Solvent Blue 104 and/or Solvent Red 135.

8. The polyester resin according to any one of Claims 1 to 7, which has a haze of at most 5.0% in the form of a molded plate having a thickness of 5 mm formed by injection molding at 280˚C.

9. The polyester resin according to any one of Claims 1 to 8, wherein the acetaldehyde content is at most 3.0 ppm, and the acetaldehyde content of a molded product formed by injection molding at 280˚C is at most 23 ppm.

10. The polyester resin according to any one of Claims 1 to 9, which has an intrinsic viscosity of at least 0.7 dl/g and a density of at least 1.38 g/cm³, and of which the color coordinate value b of the Hunter's color difference formula in the Lab color system, after heat treatment in the air at 180˚C for 4 hours, decreases from the value before the heat treatment.

11. A process for producing a polyester resin which comprises polycondensing a dicarboxylic acid component containing terephthalic acid as the main component and a diol component containing ethylene glycol as the main component in the presence of (1) a titanium compound, (2) a magnesium compound and (3) a phosphate, via an esterification reaction, **characterized in that** the addition amounts of the respective compounds (1), (2) and (3) to the reaction system are such amounts that the contents as atoms derived from the respective compounds per 1 ton of the obtained polyester resin satisfy the following formulae (I) to (V), where the total amount of titanium group atoms of the compound (1) is T (mol/ton resin), the total amount of magnesium atoms of the compound (2) is M (mol/ton resin) and the total amount of phosphorus atoms of the compound (3) is P (mol/ton resin):

$$(I) \quad 0.020 \leq T \leq 0.200$$

$$(II) \quad 0.040 \leq M \leq 0.400$$

$$(III) \quad 0.020 \leq P \leq 0.300$$

$$(IV) \quad 0.50 \leq M/P \leq 3.00$$

$$(V) \quad 0.20 \leq M/T \leq 4.00;$$

and wherein the polyester resin has a color coordinate value b of at most 1.0 and a psychometric lightness value L of at least 80, of the Hunter's color difference formula in the Lab color system, and the polyester resin contains an organic toning agent.

12. The process for producing a polyester resin according to Claim 11, wherein M/P is at least 0.90 and at most 1.80, and M/T is at least 0.50 and at most 3.50.

13. The process for producing a polyester resin according to Claim 11 or 12. wherein the order of addition of the respective compounds (1), (2) and (3) to the reaction system is (3), then (2) and then (1).

14. The process for producing a polyester resin according to any one of Claims 11 to 13 wherein the compound of titanium group element is added to the reaction system in the form of an ethylene glycol solution having a concentration of titanium group atoms of from 0.01 to 0.3 wt% and a water concentration of from 0.1 to 1 wt%, and the phosphorus compound is added to the reaction system in the form of an ethylene glycol solution having a concentration of phosphorus atoms of from 0.01 to 1 wt%.

15. The process for producing a polyester resin according to any one of Claims 11 to 14, wherein an ethylene glycol solution of titanium group element is added to the reaction system at a stage where the esterification ratio of the esterification reaction becomes at least 90%.

**Patentansprüche**

1. Polyesterharz, erhältlich durch Polykondensieren eines Dicarbonsäurebestandteils, enthaltend Terephthalsäure als Hauptbestandteil, und eines Diolbestandteils, enthaltend Ethylenglykol als Hauptbestandteil, in Gegenwart von (1) einer Verbindung von mindestens einem Element, ausgewählt aus der Gruppe, bestehend aus Titangruppenelementen der Gruppe 4A des Periodensystems, (2) einer Magnesiumverbindung und (3) einer Phosphorverbindung, mit Hilfe einer Veresterungsreaktion, **dadurch gekennzeichnet, dass** der Gehalt als Atome, die von den entsprechenden Verbindungen (1), (2) und (3) stammen, die folgenden Formeln (I) bis (V) erfüllt, wobei die Gesamtmenge an Titangruppenatomen der Verbindung (1) T (mol/Tonne Harz) ist, die Gesamtmenge an Magnesiumatomen der Verbindung (2) M (mol/Tonne Harz) ist und die Gesamtmenge an Phosphoratomen der Verbindung (3) P (mol/Tonne Harz) ist:

$$(I) \quad 0,020 \leq T \leq 0,200,$$

$$(II) \quad 0,040 \leq M \leq 0,400,$$

$$(III) \quad 0,020 \leq P \leq 0,300,$$

$$(IV) \quad 0,50 \leq M/P \leq 3,00,$$

$$(V) \quad 0,20 \leq M/T \leq 4,00;$$

und

wobei das Polyesterharz einen Farbkoordinatenwert b von höchstens 1,0 und einen psychometrischen Helligkeitswert L von mindestens 80 der Hunters Farbdifferenzformel im Lab-Farbsystem aufweist und das Polyesterharz ein organisches Tönungsmittel enthält.

2.  Polyesterharz gemäß Anspruch 1, wobei M/P mindestens 0,90 und höchstens 1,80 ist und M/T mindestens 0,50 und höchstens 3,50 ist.

3.  Polyesterharz gemäß Anspruch 1 oder 2, wobei der Gehalt als Atome, die von den entsprechenden Verbindungen (1), (2) und (3) stammen, desweiteren die folgende Formel (IV) erfüllt:

$$(VI)\quad 3,0 \leq P/M/T \leq 19,0.$$

4.  Polyesterharz gemäß einem der Ansprüche 1 bis 3, wobei der Gehalt an Ethylenglykoleinheiten, bezogen auf den Gesamtdiolbestandteil, mindestens 97,0 mol% beträgt, der Gehalt an Diethylenglykoleinheiten, bezogen auf den Gesamtdiolbestandteil, höchstens 3,0 mol% beträgt und die innere Viskosität 0,70 bis 0,90 dl/g beträgt.

5.  Polyesterharz gemäß einem der Ansprüche 1 bis 4, wobei der Gehalt an Terephthalsäureeinheiten, bezogen auf den Gesamtdicarbonsäurebestandteil, mindestens 98,5 mol% beträgt.

6.  Polyesterharz gemäß einem der Ansprüche 1 bis 5, das ein organisches Tönungsmittel in einer Menge von höchstens 3,0 ppm enthält.

7.  Polyesterharz gemäß Anspruch 6, wobei das organische Tönungsmittel Solvent Blue 104 und/oder Solvent Red 135 ist.

8.  Polyesterharz gemäß einem der Ansprüche 1 bis 7, das eine Trübung von höchstens 5,0 % in Form einer geformten Platte mit einer Dicke von 5 mm aufweist, die durch Spritzgießen bei 280 ˚C gebildet ist.

9.  Polyesterharz gemäß einem der Ansprüche 1 bis 8, wobei der Acetaldehydgehalt höchstens 3,0 ppm und der Acetaldehydgehalt eines geformten Produkts, das durch Spritzgießen bei 280 ˚C gebildet ist, höchstens 23 ppm beträgt.

10. Polyesterharz gemäß einem der Ansprüche 1 bis 9, das eine innere Viskosität von mindestens 0,7 dl/g und eine Dichte von mindestens 1,38 g/cm$^3$ aufweist und dessen Farbkoordinatenwert b der Hunters Farbdifferenzformel im Lab-Farbsystem nach Wärmebehandlung an Luft bei 180 ˚C über 4 Stunden zum Wert vor der Wärmebehandlung abnimmt.

11. Verfahren zur Herstellung eines Polyesterharzes, das Polykondensieren eines Dicarbonsäurebestandteils, enthaltend Terephthalsäure als Hauptbestandteil, und eines Diolbestandteils, enthaltend Ethylenglykol als Hauptbestandteil, in Gegenwart von (1) einer Titanverbindung, (2) einer Magnesiumverbindung und (3) eines Phosphats mit Hilfe einer Veresterungsreaktion umfasst, **dadurch gekennzeichnet, dass** die Zugabemengen der entsprechenden Verbindungen (1), (2) und (3) zu dem Reaktionssystem solche Mengen sind, dass der Gehalt als Atome, die von den entsprechenden Verbindungen stammen, pro 1 Tonne des erhaltenen Polyesterharzes die folgenden Formeln (I) bis (V) erfüllt, wobei die Gesamtmenge an Titangruppenatomen der Verbindung (1) T (mol/Tonne Harz) ist, die Gesamtmenge an Magnesiumatomen der Verbindung (2) M (mol/Tonne Harz) ist und die Gesamtmenge an Phosphoratomen der Verbindung (3) P (mol/Tonne Harz) ist:

$$(I)\quad 0,020 \leq T \leq 0,200,$$

$$(II)\quad 0,040 \leq M \leq 0,400,$$

$$(III)\ 0,020 \le P \le 0,300,$$

$$(IV)\ 0,50 \le M/P \le 3,00,$$

$$(V)\ \ 0,20 \le M/T \le 4,00;$$

und

wobei das Polyesterharz einen Farbkoordinatenwert b von höchstens 1,0 und einen psychometrischen Helligkeitswert L von mindestens 80 der Hunters Farbdifferenzformel im Lab-Farbsystem aufweist und das Polyesterharz ein organisches Tönungsmittel enthält.

12. Verfahren zur Herstellung eines Polyesterharzes gemäß Anspruch 11, wobei M/P mindestens 0,90 und höchstens 1,80 beträgt und M/T mindestens 0,50 und höchstens 3,50 beträgt.

13. Verfahren zur Herstellung eines Polyesterharzes gemäß Anspruch 11 oder 12, wobei die Reihenfolge der Zugabe der entsprechenden Verbindungen (1), (2) und (3) zu dem Reaktionssystem (3) dann (2) und dann (1) ist.

14. Verfahren zur Herstellung eines Polyesterharzes gemäß einem der Ansprüche 11 bis 13, wobei die Verbindung des Titangruppenelements zum Reaktionssystem in Form einer Ethylenglykollösung mit einer Konzentration der Titangruppenatome von 0,01 bis 0,3 Gew.-% und einer Wasserkonzentration von 0,1 bis 1 Gew.-% zugegeben wird und die Phosphorverbindung zum Reaktionssystem in Form einer Ethylenglykollösung mit einer Konzentration an Phosphoratomen von 0,01 bis 1 Gew.-% zugegeben wird.

15. Verfahren zur Herstellung eines Polyesterharzes gemäß einem der Ansprüche 11 bis 14, wobei eine Ethylenglykollösung eines Titangruppenelements zum Reaktionssystem in einer Phase, bei der die Veresterungsrate der Veresterungsreaktion mindestens 90 % beträgt, hinzugefügt wird.

**Revendications**

1. Résine de polyester pouvant être obtenue par polycondensation d'un composant acide dicarboxylique contenant de l'acide téréphtalique à titre de composant principal et d'un composant diol contenant de l'éthylèneglycol à titre de composant principal, en présence de (1) un composé d'au moins un élément choisi dans l'ensemble constitué par les éléments du groupe du titane du Groupe 4A du Tableau Périodique, (2) un composé du magnésium et (3) un composé du phosphore, via une réaction d'estérification, **caractérisée en ce que** les teneurs en atomes issus des composés respectifs (1), (2) et (3) satisfont aux formules (I) à (V) suivantes, la quantité totale d'atomes du groupe du titane du composé (1) étant T (mole/tonne de résine), la quantité totale d'atomes de magnésium du composé (2) étant M (mole/tonne de résine), et la quantité totale d'atomes de phosphore du composé (3) étant P (mole/tonne de résine) :

$$(I)\qquad 0,020 \le T \le 0,200$$

$$(II)\qquad 0,040 \le M \le 0,400$$

$$(III)\qquad 0,020 \le P \le 0,300$$

$$(IV)\qquad 0,50 \le M/P \le 3,00$$

$$(V) \qquad 0,20 \leq M/T \leq 4,00 \ ;$$

et

laquelle résine de polyester a une valeur de coordonnée de couleur b d'au plus 1,0 et une valeur de clarté psychométrique L d'au moins 80, selon la formule de différence de couleur de Hunter dans le système de couleur Lab, et laquelle résine de polyester contient un agent de nuançage organique.

2.  Résine de polyester selon la revendication 1, dans laquelle M/P vaut au moins 0,90 et au plus 1,80 et M/T vaut au moins 0,50 et au plus 3,50.

3.  Résine de polyester selon la revendication 1 ou 2, dans laquelle les teneurs en atomes issus des composés respectifs (1), (2) et (3) satisfont en outre à la formule (VI) suivante :

$$(VI) \qquad 3,0 \leq P/M/T \leq 19,0$$

4.  Résine de polyester selon l'une quelconque des revendications 1 à 3, dans laquelle la teneur en unités éthylèneglycol est d'au moins 97,0 % en moles par rapport au composant diol total, la teneur en unités diéthylèneglycol est d'au plus 3,0 % en moles par rapport au composant diol total, et la viscosité intrinsèque est de 0,70 à 0,90 dl/g.

5.  Résine de polyester selon l'une quelconque des revendications 1 à 4, dans laquelle la teneur en unités acide téréphtalique est d'au moins 98,5 % en moles par rapport au composant acide dicarboxylique total.

6.  Résine de polyester selon l'une quelconque des revendications 1 à 5, qui contient un agent de nuançage organique en une quantité d'au plus 3,0 ppm.

7.  Résine de polyester selon la revendication 6, dans laquelle l'agent de nuançage organique est le Solvent Blue 104 et/ou le Solvent Red 135.

8.  Résine de polyester selon l'une quelconque des revendications 1 à 7, qui a un trouble d'au plus 5,0 % quand elle est sous la forme d'une plaque moulée ayant une épaisseur de 5 mm, formée par moulage par injection à 280°C.

9.  Résine de polyester selon l'une quelconque des revendications 1 à 8, dans laquelle la teneur en acétaldéhyde est d'au plus 3,0 ppm, et la teneur en acétaldéhyde d'un produit moulé formé par moulage par injection à 280°C est d'au plus 23 ppm.

10. Résine de polyester selon l'une quelconque des revendications 1 à 9, qui a une viscosité intrinsèque d'au moins 0,7 dl/g et une masse volumique d'au moins 1,38 g/cm$^3$, et dont la valeur de coordonnée de couleur b selon la formule de différence de couleur de Hunter dans le système de couleur Lab, après traitement thermique dans l'air à 180°C pendant 4 heures, diminue par rapport à la valeur avant le traitement thermique.

11. Procédé pour produire une résine de polyester, qui comprend la polycondensation d'un composant acide dicarboxylique contenant de l'acide téréphtalique à titre de composant principal et d'un composant diol contenant de l'éthylèneglycol à titre de composant principal, en présence de (1) un composé du titane, (2) un composé du magnésium et (3) un phosphate, via une réaction d'estérification, **caractérisé en ce que** les quantités ajoutées, au système réactionnel, des composés respectifs (1), (2) et (3) sont des quantités telles que les teneurs en atomes issus des composés respectifs, par tonne de la résine de polyester obtenue, satisfont aux formules (I) à (V) suivantes, où la quantité totale d'atomes du groupe du titane du composé (1) est T (mole/tonne de résine), la quantité totale d'atomes de magnésium du composé (2) est M (mole/tonne de résine), et la quantité totale d'atomes de phosphore du composé (3) est P (mole/tonne de résine) :

$$(I) \qquad 0,020 \leq T \leq 0,200$$

(II) $\quad 0,040 \leq M \leq 0,400$

(III) $\quad 0,020 \leq P \leq 0,300$

(IV) $\quad 0,50 \leq M/P \leq 3,00$

(V) $\quad 0,20 \leq M/T \leq 4,00$ ;

et

dans lequel la résine de polyester a une valeur de coordonnée de couleur b d'au plus 1,0 et une valeur de clarté psychométrique L d'au moins 80, selon la formule de différence de couleur de Hunter dans le système de couleur Lab, et la résine de polyester contient un agent de nuançage organique.

12. Procédé pour produire une résine de polyester selon la revendication 11, dans lequel M/P vaut au moins 0,90 et au plus 1,80, et M/T vaut au moins 0,50 et au plus 3,50.

13. Procédé pour produire une résine de polyester selon la revendication 11 ou 12, dans lequel l'ordre d'addition au système réactionnel, des composés respectifs (1), (2) et (3) est (3), puis (2) et ensuite (1).

14. Procédé pour produire une résine de polyester selon l'une quelconque des revendications 11 à 13, dans lequel le composé de l'élément du groupe du titane est ajouté au système réactionnel sous la forme d'une solution dans l'éthylèneglycol ayant une concentration d'atomes du groupe du titane de 0,01 à 0,3 % en poids et une concentration d'eau de 0,1 à 1 % en poids, et le composé du phosphore est ajouté au système réactionnel sous la forme d'une solution dans l'éthylèneglycol ayant une concentration d'atomes de phosphore de 0,01 à 1 % en poids.

15. Procédé pour produire une résine de polyester selon l'une quelconque des revendications 11 à 14, dans lequel une solution dans l'éthylèneglycol d'élément du groupe du titane est ajoutée au système réactionnel à un stade où le taux d'estérification de la réaction d'estérification atteint au moins 90 %.

Fig. 1(a)

Fig. 1(b)

**REFERENCES CITED IN THE DESCRIPTION**

**Patent documents cited in the description**

- JP 61015088 B
- JP 2002179781 A
- JP 2002003708 A
- JP 2001081161 A